# EUROPEAN PATENT APPLICATION

(11) **EP 1 947 462 A1**
(43) Date of publication of application: **23.07.2008**
(21) Application number: 06783230.3
(22) Date of filing: 08.09.2006
(51) Int. Cl.: G01N 35/02, G01N 1/36

(54) **STIRRING DEVICE, CONTAINER, AND ANALYSIS DEVICE**

(30) Priority: 14.10.2005 JP 2005300302; 14.10.2005 JP 2005300303
(71) Applicant: Olympus Corporation, Tokyo 151-0072 (JP)
(72) Inventor: MURAKAMI, Miyuki, Shibuya Tokyo 151-0072 (JP)
(74) Representative: von Hellfeld, Axel
(86) International application number: PCT/JP2006/317870
(87) International publication number: WO 2007/043261

(57) **Abstract**

The present invention provides a stirrer that stirs a liquid retained in a vessel by a sonic wave, a vessel and an analyzer. A stirrer (20) has a surface acoustic wave device (24) which has plural sound generators (24b, 24c) each having a different resonance frequency and is for emitting the sonic wave generated from the sound generator toward the liquid, and drive control unit (21) that changes the sound generator, which generates the sonic wave, to a specific sound generator among the plural sound generators by changing the frequency of a drive signal input to the sonic wave generating unit. A vessel (5) retaining a liquid that is stirred by a sonic wave includes a surface acoustic wave device (24) having plural sound generators (24b, 24c) each having a different resonance frequency, wherein the sound generator emitting a sonic wave emitted to the liquid is switched to a specific sound generator among the plural sound generators by change in the frequency of the drive signal.

## Description

### TECHNICAL FIELD

The present invention relates to a stirrer, a vessel, and an analyzer for stirring a liquid by a sonic wave.

### BACKGROUND ART

As means for stirring a liquid by a sonic wave, there has conventionally been known stirring means that is used in a chemical analyzer and has sonic wave generating means at the outside of a vessel retaining a liquid for stirring the liquid by emitting the sonic wave to the vessel (see, for example, Patent Document 1). In the stirring means, a piezoelectric device has plural separate electrodes that individually serve as a sound source, wherein the separate electrodes that are vibrated with a predetermined frequency by a piezoelectric device driver are switched, thereby being capable of changing the irradiation position of the sonic wave in the vertical direction (see, for example, Patent Document 1).

Patent Document 1: Japanese Patent No. 3642713

### DISCLOSURE OF INVENTION

### PROBLEM TO BE SOLVED BY THE INVENTION

In the stirring means disclosed in Patent Document 1, the piezoelectric device driver selects the separate electrode, among the plural separate electrodes serving as an individual sound source, to which power is applied, in order to control the generation position of the sonic wave. Therefore, each of the separate electrodes and the piezoelectric device driver are connected by a wiring. Accordingly, the stirring means disclosed in the Patent Document 1 needs a switch circuit for selecting the separate electrode, thereby entailing a problem of complicated electric circuit.

The present invention is made in view of the foregoing problem, and it is an object to provide a stirrer, a vessel and an analyzer in which a sound generator that emits a sonic wave is easily switched to a specific sound generator, even if plural sound generators are provided, and a structure of an electric circuit is simple.

### MEANS FOR SOLVING PROBLEM

In order to solve the foregoing problem and achieve the object, an aspect of a stirrer according to the present invention is a stirrer for stirring a liquid retained in a vessel with a sonic wave. The stirrer includes sonic wave generating unit which has plural sound generators each having a different resonance frequency and is for emitting the sonic wave generated from the sound generator toward the liquid, and a drive control unit that switches the sound generator, which generates the sonic wave, to a specific sound generator among the plural sound generators by changing the frequency of a drive signal input to the sonic wave generating unit.

According to an aspect of the stirrer of the present invention, in the above-mentioned invention, the drive control unit changes a position of the sound generator which emits the sonic wave or a number of the sound generators which emits the sonic wave, according to the frequency of the drive signal.

According to an aspect of the stirrer of the present invention, in the above-mentioned invention, the drive control unit changes the frequency of the drive signal based on received information about an inspection item of the liquid, a property of the liquid, or the amount of the liquid.

According to an aspect of the stirrer of the present invention, in the above-mentioned invention, the drive control unit causes a series of flow in the liquid by controlling an order of switching the sound generator emitting the sonic wave to the specific sound generator.

According to an aspect of the stirrer of the present invention, in the above-mentioned invention, the series of flow is a swirl.

According to an aspect of the stirrer of the present invention, in the above-mentioned invention, the liquid contains at least a first liquid and a second liquid that is less than the first liquid, and the series of flow is a flow for drawing the second liquid into the first liquid.

According to an aspect of the stirrer of the present invention, in the above-mentioned invention, the drive control unit switches the sound generator emitting the sonic wave by driving the plural sound generators at a different timing.

According to an aspect of the stirrer of the present invention, in the above-mentioned invention, one of the plural sound generators emits the sonic wave in the different directions by 90°.

According to an aspect of the stirrer of the present invention, in the above-mentioned invention, a direction of the sonic waves emitted this time from the plural sound generators is different from a direction of the sonic wave emitted last time from the plural sound generators by 90°.

According to an aspect of the stirrer of the present invention, in the above-mentioned invention, the drive control unit simultaneously inputs drive signals each having the same drive frequency to the plural sound generators.

According to an aspect of the stirrer of the present invention, in the above-mentioned invention, the drive control unit drives the plural sound generators in an order of switching the sound generator to the specific sound generator, and then, drives the plural sound generators in an order different from the switching order.

According to an aspect of the stirrer of the present invention, in the above-mentioned invention, the sonic wave generating unit receives the drive signal from a set of input units.

According to an aspect of the stirrer of the present invention, in the above-mentioned invention, the sound generator of the sonic wave generating unit is switched to the sound generator emitting the sonic wave among the plural sound generator by a self-selection caused due to change in the frequency of the drive signal by the drive control unit.

According to an aspect of the stirrer of the present invention, in the above-mentioned invention, the plural sound generators are arranged so as to be adjacent to each other or apart from each other.

According to an aspect of the stirrer of the present invention, in the above-mentioned invention, the resonance frequency is discontinuously changed in the plural sound generators.

According to an aspect of the stirrer of the present invention, in the above-mentioned invention, the resonance frequency is continuously changed in the plural sound generators.

According to an aspect of the stirrer of the present invention, in the above-mentioned invention, the drive control unit changes the frequency of the drive signal input to the sonic wave generating unit over a band including different resonance frequency.

According to an aspect of the stirrer of the present invention, in the above-mentioned invention, the sonic wave generating unit is a surface acoustic wave device having a piezoelectric substrate and plural inter digital transducers, and the plural sound generators are the plural inter digital transducers.

According to an aspect of the stirrer of the present invention, in the above-mentioned invention, distances between the inter digital transducers of the plural inter digital transducers on the piezoelectric substrate are different from each other.

According to an aspect of the stirrer of the present invention, in the above-mentioned invention, the sonic wave generating unit is a thickness-mode transducer having a piezoelectric substrate whose thickness increases in one direction and an electrode mounted on both surfaces of the piezoelectric substrate.

According to an aspect of the stirrer of the present invention, in the above-mentioned invention, the sonic wave generating unit is arranged at a position apart from the liquid.

According to an aspect of the stirrer of the present invention, in the above-mentioned invention, the drive control unit changes a frequency of a drive voltage or drive current that is the drive signal input to the sonic wave generating unit.

In order to solve the foregoing problem and achieve the object, an aspect of a vessel of the present invention is a vessel retaining a liquid that is stirred by a sonic wave, the vessel including a sonic wave generating unit, having plural sound generators each having a different resonance frequency, wherein the sound generator generating a sonic wave emitted to the liquid is switched to a specific sound generator among the plural sound generators by change in the frequency of the drive signal.

According to an aspect of the vessel of the present invention, in the above-mentioned invention, the drive signal is input from a set of input units.

In order to solve the foregoing problem and achieve the object, one aspect of an analyzer of the present invention is an analyzer that stirs and reacts a liquid sample containing a specimen and a reagent and retained in a vessel so as to analyze a reaction solution, including the stirrer.

### EFFECT OF THE INVENTION

A stirrer according to the present invention includes sonic wave generating means which has plural sound generators each having a different resonance frequency and is for emitting the sonic wave generated from the sound generator toward the liquid, and drive control means that changes the sound generator, which generates the sonic wave, to a specific sound generator among the plural sound generators by changing the frequency of a drive signal input to the sonic wave generating means, and an analyzer according to the present invention includes the stirrer. Therefore, even if plural sound generators are provided, the sound generator emitting a sonic wave is easily switched to a specific sound generator, whereby the present invention provides an effect of simplifying the structure of an electric circuit. A vessel according to the present invention includes sonic wave generating means having plural sound generators each having a different resonance frequency, wherein the sound generator emitting a sonic wave irradiated to the liquid is switched to a specific sound generator among the plural sound generators by changing the frequency of the drive signal. Therefore, the sound generator emitting a sonic wave is easily switched to a specific sound generator, whereby the present invention provides an effect of simplifying the structure of an electric circuit.

### BRIEF DESCRIPTION OF DRAWINGS

FIG. 1 is a schematic structural view of an automatic analyzer according to a first embodiment provided with a stirrer;
FIG. 2 is a perspective view showing an A-part of a cuvette wheel constituting the automatic analyzer shown in FIG. 1 as enlarged, a part of which is shown as a section;
FIG. 3 is a cross-sectional plan view of the cuvette wheel accommodating a reactor vessel, in which the cuvette wheel is horizontally cut at the position of a wheel electrode;
FIG. 4 is a block diagram showing a schematic configuration of a stirrer according to the first embodiment together with a perspective view of a reactor vessel;
FIG. 5 is an equivalent circuit diagram of a surface acoustic wave device constituting the stirrer shown in FIG. 4;
FIG. 6 is an equivalent circuit diagram when the surface acoustic wave device shown in FIG. 5 is driven with a frequency f1;
FIG. 7 is an equivalent circuit diagram when the surface acoustic wave device shown in FIG. 5 is driven with a frequency f2;
FIG. 8 is a waveform chart of a drive signal that drives a transducer of the surface acoustic wave device with the frequency f1 during the period when the cuvette wheel is stopped;
FIG. 9 is a cross-sectional view showing an acoustic flow generated in the liquid sample in the reactor vessel when the transducer of the surface acoustic wave device is driven by the drive signal with the frequency f1, together with a block diagram showing a schematic configuration of the stirrer in which the reactor vessel is sectionally shown;
FIG. 10 is a waveform chart of a drive signal that drives the transducer of the surface acoustic wave device with the frequency changed between f1 and f2 during the period when the cuvette wheel is stopped;
FIG. 11 is a cross-sectional view showing an acoustic flow generated in the liquid sample in the reactor vessel when the transducer of the surface acoustic wave device is driven by the drive signal with the frequency changed between f1 and f2, together with a block diagram showing a schematic configuration of the stirrer in which the reactor vessel is sectionally shown;
FIG. 12 is a perspective view showing a structure of a cuvette wheel in an automatic analyzer according to a second embodiment, wherein an A-part of the cuvette wheel constituting the automatic analyzer shown in FIG. 1 is enlarged and a part thereof is sectionally shown;
FIG. 13 is a perspective view of a reactor vessel from which a cap is removed;
FIG. 14 is a front view of a surface acoustic wave device mounted on the outer face of the bottom wall of the reactor vessel;
FIG. 15 is a block diagram showing the schematic configuration of the stirrer according to the second embodiment, together with a perspective view of the reactor vessel;
FIG. 16 is a waveform chart of a drive signal that drives the transducer of the surface acoustic wave device with the frequency changed between f1 and f2 during the period when the cuvette wheel is stopped;
FIG. 17 is a plan view of a reactor vessel showing a sonic wave leaking into the liquid sample in the reactor vessel and an acoustic flow generated by the sonic wave, when the transducer of the surface acoustic wave device is driven by a drive signal with a frequency f1;
FIG. 18 is a plan view of a reactor vessel showing a sonic wave leaking into the liquid sample in the reactor vessel and an acoustic flow generated by the sonic wave, when the transducer of the surface acoustic wave device is driven by a drive signal with a frequency f2;
FIG. 19 is a block diagram showing a schematic configuration of a stirrer according to a third embodiment, together with a perspective view of the reactor vessel;
FIG. 20 is a perspective view of the reactor vessel from which a cap is removed;
FIG. 21 is a front view of a surface acoustic wave device mounted on the bottom wall of the reactor vessel;
FIG. 22 is a waveform chart showing a drive signal that drives the transducer of the surface acoustic wave device with the frequency changed in the order of f4 to f1 during the period when the cuvette wheel is stopped;
FIG. 23 is a plan view of a reactor vessel showing a sonic wave leaking into the liquid sample in the reactor vessel and an acoustic flow generated by the sonic wave, when the transducer of the surface acoustic wave device is driven by a drive signal with a frequency f4;
FIG. 24 is a plan view of a reactor vessel showing a sonic wave leaking into the liquid sample in the reactor vessel and an acoustic flow generated by the sonic wave, when the transducer of the surface acoustic wave device is driven by a drive signal with a frequency f3;
FIG. 25 is a plan view of a reactor vessel showing a sonic wave leaking into the liquid sample in the reactor vessel and an acoustic flow generated by the sonic wave, when the transducer of the surface acoustic wave device is driven by a drive signal with a frequency f2;
FIG. 26 is a plan view of a reactor vessel showing a sonic wave leaking into the liquid sample in the reactor vessel and an acoustic flow generated by the sonic wave, when the transducer of the surface acoustic wave device is driven by a drive signal with a frequency f1;
FIG. 27 is a plan view of the reactor vessel showing a swirl generated by the continued acoustic flow having a large flow rate among the acoustic flows generated in the liquid sample retained in the reactor vessel;
FIG. 28 is a waveform chart showing a drive signal that drives the transducer of the surface acoustic wave device with the frequency changed in the order of f1 to f4 during the period when the cuvette wheel is stopped;
FIG. 29 is a perspective view according to a modification of a stirrer having a surface acoustic wave device mounted on a side wall of a reactor vessel, together with a block diagram showing a schematic configuration of the stirrer;
FIG. 30 is a front view showing a first modification of a surface acoustic wave device used in the stirrer in the first to the third embodiments;
FIG. 31 is a front view showing a second modification of a surface acoustic wave device used in the stirrer in the first to the third embodiments;
FIG. 32 is a front view showing a third modification of a surface acoustic wave device used in the stirrer in the first to the third embodiments;
FIG. 33 is a front view showing a fourth modification of a surface acoustic wave device used in the stirrer in the first to the third embodiments;
FIG. 34 is a front view showing a fifth modification of a surface acoustic wave device used in the stirrer in the first to the third embodiments;
FIG. 35 is a waveform chart of a drive signal that drives the transducer of the surface acoustic wave device with the frequency changed between f1 and f2 during the period when the cuvette wheel is stopped, in the stirrer using the surface acoustic wave device shown in FIG. 33;
FIG. 36 is a cross-sectional view showing an acoustic flow generated in the liquid sample in the reactor vessel when the transducer of the surface acoustic wave device is driven by the drive signal with the frequency changed between f1 and f2, together with a block diagram showing a schematic configuration of the stirrer in which the reactor vessel is sectionally shown;
FIG. 37 is a waveform chart of a drive signal that drives the transducer of the surface acoustic wave device with the frequency changed among f1 to f4 during the period when the cuvette wheel is stopped, in the stirrer using the surface acoustic wave device shown in FIG. 33;
FIG. 38 is a cross-sectional view showing an acoustic flow generated in the liquid sample in the reactor vessel when the transducer of the surface acoustic wave device is driven by the drive signal with the frequency changed among f1 to f4, together with a block diagram showing a schematic configuration of the stirrer in which the reactor vessel is sectionally shown;
FIG. 39 is a block diagram showing a schematic configuration of a stirrer according to a fourth embodiment, together with a cross-sectional view of the reactor vessel;
FIG. 40 is a perspective view of a thickness-mode transducer used in the stirrer shown in FIG. 39 according to the fourth embodiment;
FIG. 41 is a frequency characteristic diagram of the thickness-mode transducer showing a relationship between the position along the longitudinal direction of the piezoelectric substrate and the center frequency;
FIG. 42 is a waveform chart of a drive signal that drives the thickness-mode transducer with a frequency f1 during the period when the cuvette wheel is stopped;
FIG. 43 is a waveform chart of a drive signal that drives the thickness-mode transducer with the frequency changed between f1 and f2 during the period when the cuvette wheel is stopped;
FIG. 44 is a perspective view showing a first modification of a thickness-mode transducer used in the stirrer according to the fourth embodiment;
FIG. 45 is a plan view of the thickness-mode transducer shown in FIG. 44;
FIG. 46 is a perspective view showing a second modification of a thickness-mode transducer used in the stirrer according to the fourth embodiment; and
FIG. 47 is a block diagram showing a schematic configuration of the modification of the stirrer according to the fourth embodiment, together with a cross-sectional view of a reactor vessel and a thermostatic chamber.

### EXPLANATIONS OF LETTERS OF NUMERALS

1 Automatic analyzer
2, 3 Reagent table
4 Cuvette wheel
5 Reactor vessel
5a Holding part
5b Side wall
5c Window
5d Rubber cap
5e Electrode pad
6, 7 Reagent dispensing mechanism
8 Specimen vessel transferring mechanism
9 Feeder
10 Rack
11 Specimen dispensing mechanism
12 Analyzing optical system
13 Cleaning mechanism
15 Control unit
16 Input unit
17 Display unit
20 Stirrer
21 Drive control unit
21b Contactor
22 Signal generator
23 Drive control circuit
24 Surface acoustic wave device
24a Piezoelectric substrate
24b, 24c Transducer
24d Input terminal
24e Bus bar
24f, 24g Transducer
30, 35 Stirrer
40 Stirrer
44 Thickness-mode transducer
44a Piezoelectric substrate
44b Signal line electrode
44c Ground electrode
45, 47 Thickness-mode transducer
45a, 47a Piezoelectric substrate
45b, 47b Signal line electrode
45c, 47c Ground electrode
49 Thermostatic chamber
F Swirl
L Liquid
Ls Liquid sample
S1 to S4 Acoustic flow
Ts Stopping time
Wa Sonic wave
Wa1, Wa2 Sonic wave
Wa3, Wa4 Sonic wave

### BEST MODE FOR CARRYING OUT THE INVENTION

### (First Embodiment)

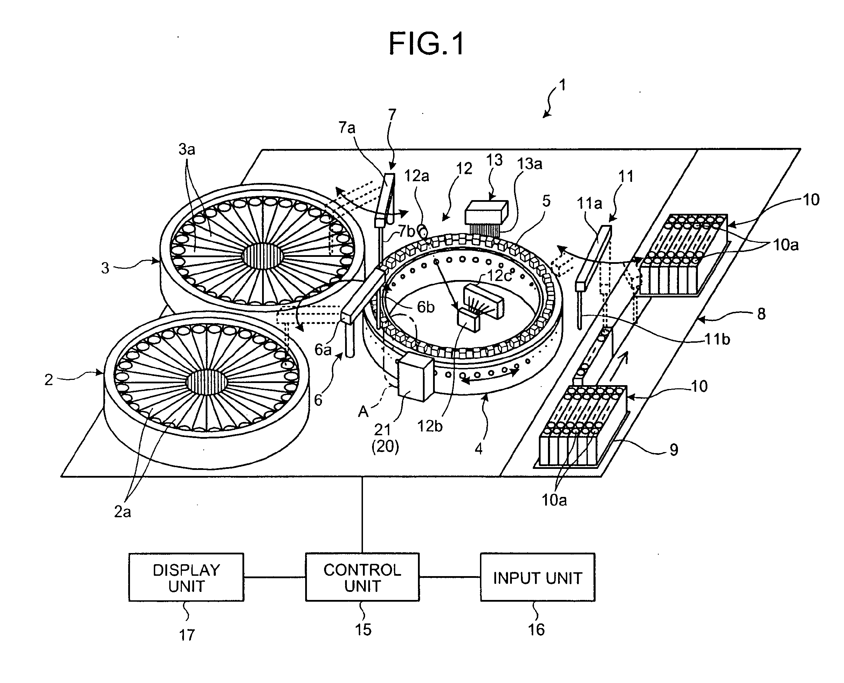

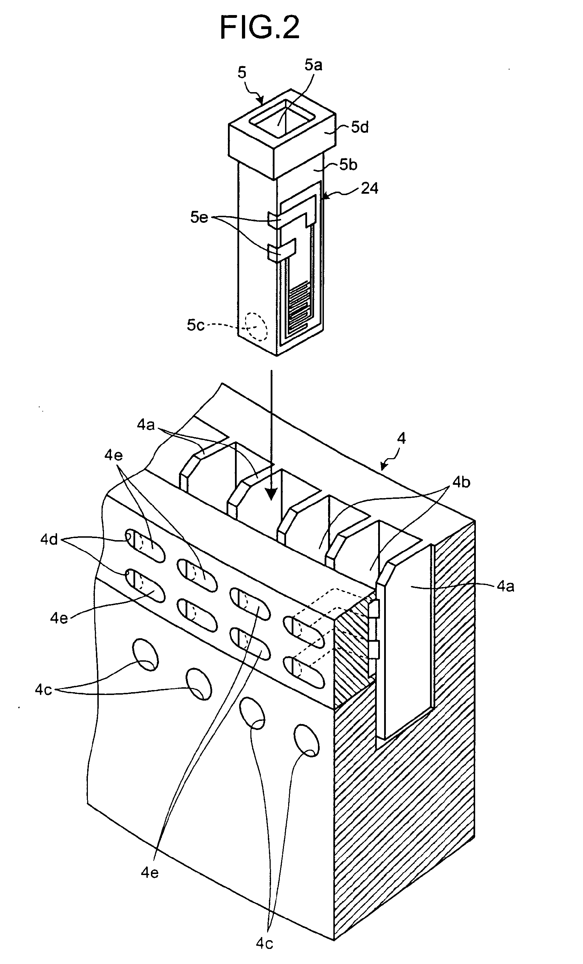

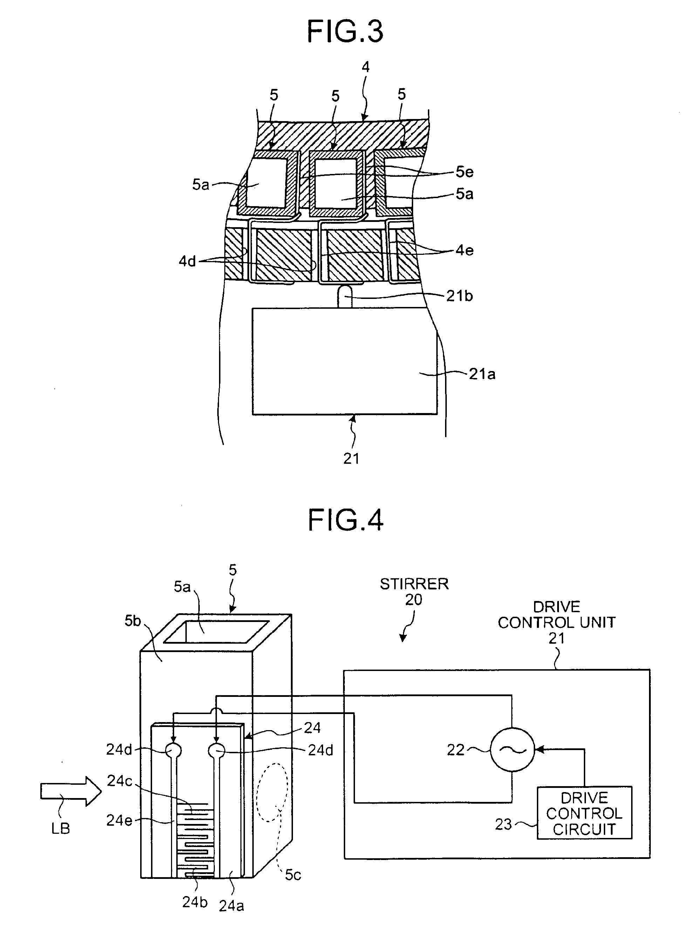

A stirrer, a vessel and an analyzer according to a first embodiment of the present invention will be explained below in detail with reference to the drawings. FIG. 1 is a schematic structural view of the automatic analyzer provided with the stirrer. FIG. 2 is a perspective view of a cuvette wheel constituting the automatic analyzer shown in FIG. 1, wherein an A-part thereof is enlarged and a part thereof is sectionally shown. FIG. 3 is a cross-sectional plan view of the cuvette wheel accommodating a reactor vessel, in which the cuvette wheel is horizontally cut at the position of a wheel electrode. FIG. 4 is a block diagram showing a schematic configuration of the stirrer together with a perspective view of the reactor vessel.

As shown in FIGS. 1 and 2, the automatic analyzer 1 has reagent tables 2 and 3, a cuvette wheel 4, a specimen vessel transferring mechanism 8, an analyzing optical system 12, a cleaning mechanism 13, a control unit 15, and a stirrer 20.

As shown in FIG. 1, the reagent tables 2 and 3 hold plural reagent vessels 2a and 3a arranged respectively in the circumferential direction, and are rotated by driving means so as to convey the reagent vessels 2a and 3a in the circumferential direction.

As shown in FIG. 1, the cuvette wheel 4 has plural holders 4b formed in the circumferential direction by plural partition plates 4a that are formed in the circumferential direction for arranging the reactor vessel 5 put therein. The cuvette wheel 4 is rotated in the direction indicated by an arrow by unillustrated driving means so as to convey the reactor vessel 5. As shown in FIG. 2, photometry holes 4c are formed at the position of the cuvette wheel 4 corresponding to the lower part of the respective holders 4b in the radius direction. Wheel electrodes 4e are mounted by utilizing two vertically-arranged insertion holes 4d formed above the photometry holes 4c. As shown in FIGS. 2 and 3, one end of the wheel electrode 4e extending from the insertion hole 4d is bent to be in contact with the outer face of the cuvette wheel 4, while the other end extending from the insertion hole 4d is bent to be arranged in the vicinity of the inner face of the holder 4b, thereby holding the reactor vessel 5 arranged in the holder 4b with a spring force. A reagent is dispensed into the reactor vessel 5 from the reagent vessels 2a and 3a of the reagent tables 2 and 3 by the reagent dispensing mechanisms 6 and 7 arranged in the vicinity. As shown in FIG. 1, the reagent dispensing mechanisms 6 and 7 have probes 6b and 7b that dispense the reagent to arms 6a and 7a that pivot in the horizontal plane in the direction shown by an arrow, and cleaning means for cleaning the probes 6b and 7b with washwater.

On the other hand, the reactor vessel 5 is made of an optically transparent material. As shown in FIG. 2, the reactor vessel 5 is a vessel having a square cylindrical shape and having a holding unit 5a for holding a liquid. A surface acoustic wave device 24 is provided at the side wall 5b of the reactor vessel 5, and electrode pads 5e that are connected to a set of input terminals 24d of the surface acoustic wave device 24 are mounted on the reactor vessel. The reactor vessel 5 is made of a material that transmits 80% or more of light included in the analytical light (340 to 800 nm) emitted from a later-described analyzing optical system 12, e.g., a glass containing a heat-resistant glass, a synthetic resin such as ring olefin or polystyrene, etc. are used. The portion of the reactor vessel 5 encircled by a dotted line at the lower part thereof adjacent to the portion where the surface acoustic wave device 24 is mounted is used as a window 5c for photometry which allows the analytical light to pass. When the reactor vessel 5 is used, a dripproof rubber cap 5d is put on the reactor vessel 5, and the reactor vessel 5 is set to the holder 4b with the surface acoustic wave device 24 facing the partition plate 4a. Thus, as shown in FIG. 3, each of the electrode pads 5e of the reactor vessel 5 comes in contact with the corresponding wheel electrode 4e. The electrode pads 5e are formed so as to be integral with the surface acoustic wave device 24.

As shown in FIG. 1, the specimen vessel transferring mechanism 8 is transferring means for transferring, one by one, plural racks 10 arranged to a feeder 9 along the direction indicated by the arrow, wherein the racks 10 are transferred as advanced step by step. The rack 10 holds plural specimen vessels 10a accommodating a specimen. Every time the advance of the rack 10 transferred by the specimen vessel transferring mechanism 8 is stopped, the specimen is dispensed into each reaction vessel 5 by a specimen dispensing mechanism 11 having an arm 11a that is horizontally pivoted and a probe 11b. Therefore, the specimen dispensing mechanism 11 has cleaning means (not shown) for cleaning the probe 11b with washwater.

The analyzing optical system 12 emits an analytical light (340 to 800 nm) for analyzing the liquid sample, in the reaction vessel 5, obtained by the reaction of the reagent and the specimen. As shown in FIG. 1, the analyzing optical system 12 has a light-emitting unit 12a, a spectral unit 12b, and a light-receiving unit 12c. The analytical light emitted from the light-emitting unit 12a transmits the liquid sample in the reaction vessel 5 and received by the light-receiving unit 12c provided at the position opposite to the spectral unit 12b. The light-receiving unit 12c is connected to the control unit 15.

The cleaning mechanism 13 sucks the liquid sample in the reactor vessel 5 with a nozzle 13a for discharging the same, and then, repeatedly injects and sucks wash liquid such as a detergent or washwater by the nozzle 13a, whereby the reactor vessel 5 in which the analysis by the analyzing optical system 12 is completed is cleaned.

The control unit 15 controls the operation of each unit of the automatic analyzer 1, and analyzes the component or concentration of the specimen on the basis of the absorbance of the liquid sample in the reaction vessel 5 according to the quantity of the light emitted from the light-emitting unit 12a and the quantity of the light received by the light-receiving unit 12c. For example, a microcomputer or the like is used for the control unit 15. The control unit 15 is connected to an input unit 16 and a display unit 17 as shown in FIG. 1. The input unit 16 is a portion for inputting inspection items or the like to the control unit 15. For example, a keyboard or mouse is used for the input unit 16. The input unit 16 is also used for the operation of changing the frequency of a drive signal input to the surface acoustic wave device 24 of the stirrer 20. The display unit 17 displays the content of the analysis or alarm. A display panel or the like is used for the display unit 17.

As shown in FIG. 4, the stirrer 20 has a drive control unit 21 and the surface acoustic wave device 24. The drive control unit 21 is a single drive control unit that changes the frequency of the drive signal input to the surface acoustic wave device 24 on the basis of the information input from the input unit 16 through the control unit 15, such as inspection items of the liquid, property or amount of the liquid, etc., so as to change the position of a sound generator that generates a sonic wave. The drive control unit 21 is arranged so as to be opposite to the cuvette wheel 4 at the outer periphery of the cuvette wheel 4 (see FIG. 1), and has a brush-like contactor 21b (see FIG. 3) provided to a housing 21a, as well as a signal generator 22 and a drive control circuit 23 in the housing 21a. The contactor 21b is provided at the housing 21a opposite to two wheel electrodes 4e, wherein the contactor 21a comes in contact with the wheel electrodes 4e when the cuvette wheel 4 stops, so that the drive control unit 21 and the surface acoustic wave device 24 of the reactor vessel 5 are electrically connected.

The signal generator 22 has an oscillation circuit that can change the oscillation frequency on the basis of the control signal input from the drive control circuit 23, and inputs a high-frequency drive signal of about several MHz to several hundreds MHz to the surface acoustic wave device 24. Electronic control unit (ECU) having a memory and a timer incorporated therein is used for the drive control circuit 23. The drive control circuit 23 controls the operation of the signal generator 22 on the basis of the control signal input from the input unit 16 through the control unit 15, thereby controlling the voltage or current of the drive signal outputted to the surface acoustic wave device 24 from the signal generator 22. The drive control circuit 23 controls, for example, the characteristic (frequency, intensity, phase, characteristic of a wave), waveform (sine wave, triangular wave, rectangular wave, burst wave, etc.), modulation (amplitude modulation, frequency modulation), or the like of the sonic wave emitted from the surface acoustic wave device 24 by controlling the operation of the signal generator 22. The drive control circuit 23 can also change the frequency of the high-frequency signal oscillated from the signal generator 22 in accordance with the incorporated timer.

As shown in FIG. 4, the surface acoustic wave device 24 has transducers 24b and 24c, which are composed of an inter digital transducer (IDT), on the surface of a piezoelectric substrate 24a with a small distance therebetween. The transducers 24b and 24c are sound generators that convert the drive signal input from the drive control unit 21 into a surface acoustic wave (sonic wave), wherein plural fingers constituting the transducers 24b and 24c are arranged along the longitudinal direction of the piezoelectric substrate 24a. In the surface acoustic wave device 24, a set of input terminals 24d and the single drive control unit 21 are connected by the contactor 21b that comes in contact with the wheel electrodes 4e. The transducers 24b and 24c and the input terminals 24d are connected by the bus bar 24e. The surface acoustic wave device 24 is attached to the side wall 5b of the reactor vessel 5 through the acoustic matching layer such as epoxy resin or the like. In the drawings showing the surface acoustic wave device explained below including the surface acoustic wave device 24 shown in FIG. 4, the line width or pitch of the plural fingers constituting the transducer is not always correctly illustrated, because the drawings aim to show the schematic structure. The electrode pads 5e shown in FIG. 2 may be integrally provided on the input terminals 24d, and alternatively, the input terminals 24d may be the electrode pads 5e.

In the automatic analyzer 1 thus configured, the reagent dispensing mechanisms 6 and 7 successively dispense the reagent from the reagent vessels 2a and 3a into the plural reaction vessels 5 conveyed along the circumferential direction by the rotating cuvette wheel 4. The specimen is successively dispensed by the specimen dispensing mechanism 11 from the plural specimen vessels 10a retained at the rack 10 into the reaction vessels 5 to which the reagent is dispensed. Every time the cuvette wheel 4 stops, the contactor 21b comes in contact with the wheel electrode 4e, so that the drive control unit 21 and the surface acoustic wave device 24 at the reactor vessel 5 are electrically connected. Therefore, the dispensed reagent and the specimen in the reactor vessel 5 are stirred to be reacted by the stirrer 20.

In the automatic analyzer 1, the amount of the specimen is generally smaller than the amount of the reagent. The specimen in a small amount dispensed into the reactor vessel 5 are caught by the reagent in a large amount due to a series of flow produced by the stirring in the liquid, whereby the reaction of the specimen and the reagent is promoted. The reaction solution obtained by the reaction of the specimen and the reagent as described above passes through the analyzing optical system 12 when the cuvette wheel 4 rotates again, and as shown in FIG. 4, a light beam LB emitted from the light-emitting unit 12a transmits. In this case, the reaction solution of the reagent and the specimen in the reactor vessel 5 is subject to photometry by the light-receiving unit 12c, whereby the component or concentration is analyzed by the control unit 15. The reaction vessel 5 after completing the analysis is cleaned by the cleaning mechanism 13, and used again for the analysis of the specimen.

In the automatic analyzer 1, the drive control unit 21 inputs the drive signal to the input terminals 24d from the contactor 21b on the basis of the control signal input from the input unit 16 through the control unit 15, when the cuvette wheel 4 stops. Thus, the transducer 24b or 24c of the surface acoustic wave device 24 is driven in accordance with the frequency of the input drive signal so as to induce a surface acoustic wave (sonic wave). The induced surface acoustic wave (sonic wave) is propagated from the acoustic matching layer into the side wall 5b of the reactor vessel 5, and leaks into the liquid sample whose acoustic impedance is close to the surface acoustic wave. As a result, two flows toward the diagonally upward direction and toward the diagonally downward direction with the position corresponding to the transducer 24b or 24c in the liquid sample defined as a starting point are produced in the reactor vessel 5, whereby the dispensed reagent and the specimen are stirred by these two flows.

The surface acoustic wave device 24 is provided such that the electric impedance at the center frequency of each of the transducers 24b and 24c is set to 50 Ω that is the same as the electric impedance of an external electric system, and the surface acoustic wave device 24 is driven with its center frequency. Since the impedance of the transducers 24b and 24c and the impedance of the external electric system are the same, the surface acoustic wave device 24 can input the drive signal to the transducers 24b and 24c without an electrical reflection.

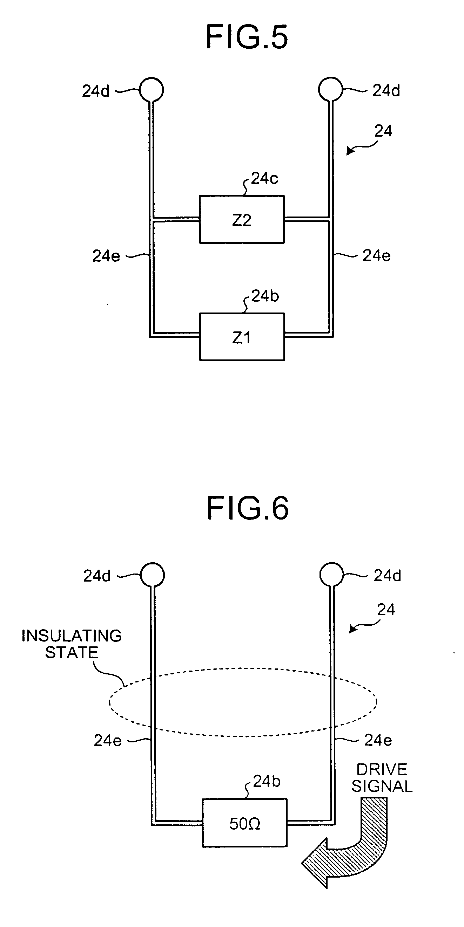

In the surface acoustic wave device 24, the center frequencies of the transducers 24b and 24c are set to f1 and f2 (f1 < f2), for example. In this case, the equivalent circuit of the surface acoustic wave device 24 is as shown in FIG. 5 with the impedances of the transducers 24b and 24c defined as Z1 and Z2 respectively. Therefore, when the drive control unit 21 inputs the drive signal with the frequency f1 to the surface acoustic wave device 24, for example, the impedance of the transducer 24b becomes 50 Ω, while the impedance of the transducer 24c becomes ∞. Accordingly, as shown in FIG. 6, the surface acoustic wave device 24 is apparently configured such that the transducer 24c is not present (insulating state) and only the transducer 24b is driven by the input drive signal.

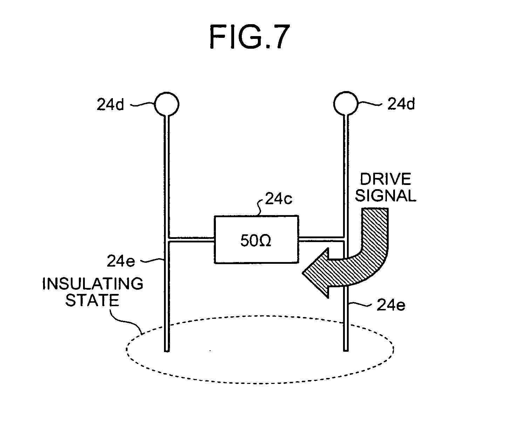

On the other hand, when the drive control unit 21 inputs the drive signal with the frequency f2 to the surface acoustic wave device 24, the impedance of the transducer 24b becomes ∞, while the impedance of the transducer 24c becomes 50 Ω, which are contrary to the above-mentioned case. Therefore, as shown in FIG. 7, the surface acoustic wave device 24 is apparently configured such that the transducer 24b is not present (insulating state) and only the transducer 24c is driven by the input drive signal. In case where the impedance of the external electric system is set to the other values, e.g., 70 Ω, the transducers 24b and 24c may be designed to have the electric impedances of 70 Ω at the center frequency.

Accordingly, in the automatic analyzer 1, the drive control unit 21 changes the drive signal outputted to the surface acoustic wave device 24 by the input operation at the input unit 16. For example, when the amount of the liquid is small, the drive signal of the frequency f1 is input to the surface acoustic wave device 24. According to the operation, the contactor 21b is brought into contact with the wheel electrodes 4e when the cuvette wheel 4 stops in the automatic analyzer 1, whereby the drive signal of the frequency f1 is input to the surface acoustic wave device 24.

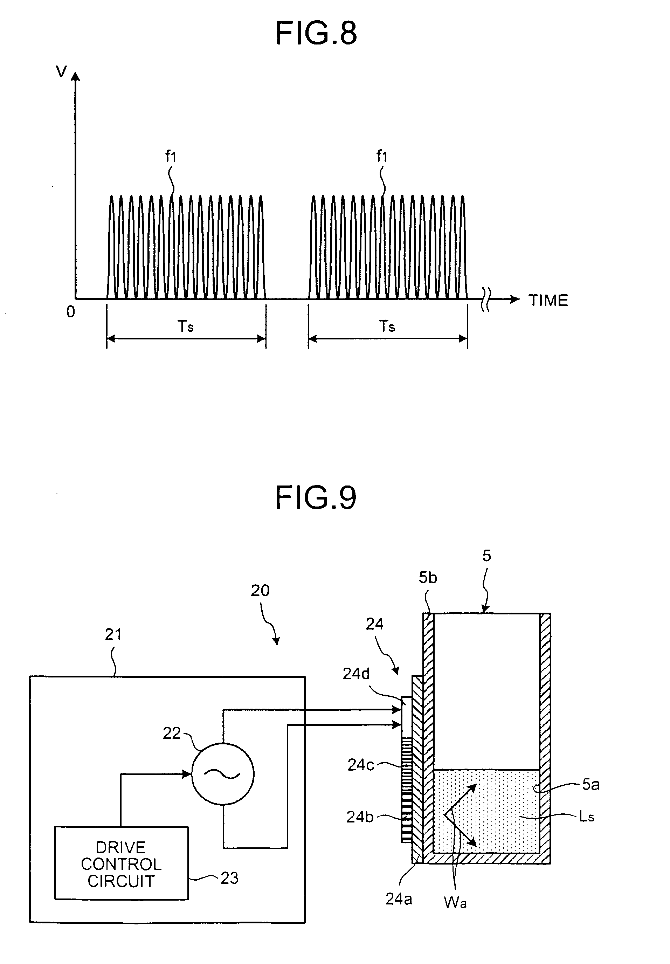

Thus, in the stirrer 20, the transducer 24b of the surface acoustic wave device 24 is successively driven by the drive signal with the frequency f1 during the stop period Ts when the cuvette wheel 4 stops, as shown in FIG. 8. As a result, the surface acoustic wave (sonic wave) induced by the transducer 24b during when the cuvette wheel 4 stops is propagated from the acoustic matching layer into the side wall 5b of the reactor vessel 5, and leaks into the liquid sample having a close acoustic impedance. The leaked sonic wave produces an acoustic flow, so that the dispensed reagent and the specimen are stirred.

In this case, the transducer 24b is provided at the lower part of the reactor vessel 5 as shown in FIG. 4. Therefore, the sonic wave Wa leaking into the liquid sample Ls in the reactor vessel 5 directs in two directions indicated by the arrows as shown in FIG. 9, i.e., in the diagonally upward direction and diagonally downward direction with the position in the liquid sample Ls corresponding to the transducer 24b defined as a starting point. Accordingly, two acoustic flows corresponding to two directions are produced in the liquid sample Ls retained in the reactor vessel 5, whereby the dispensed reagent and the specimen are stirred.

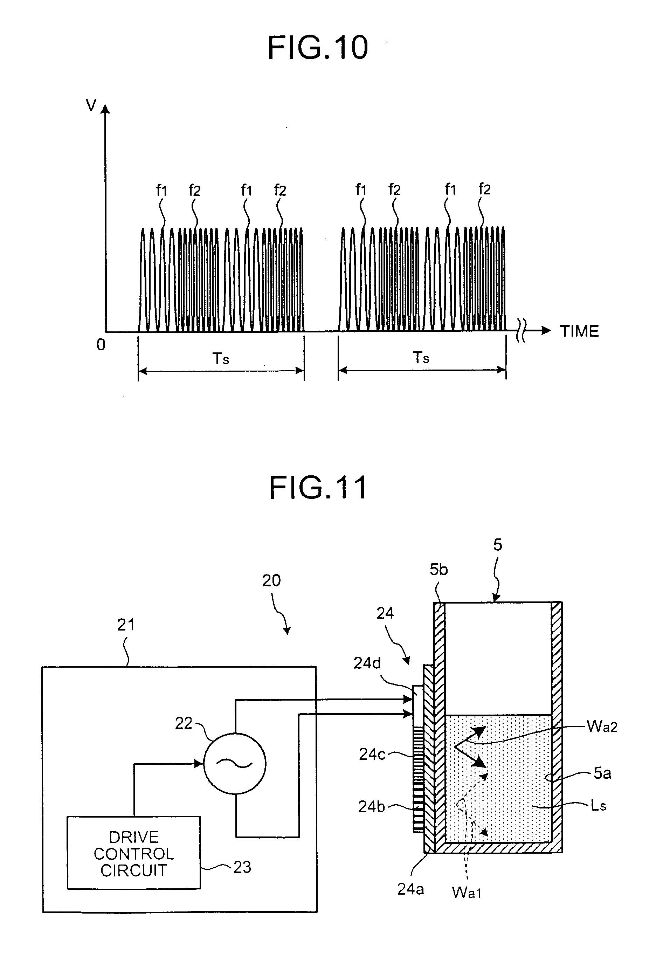

On the other hand, when the amount of the liquid is large, the automatic analyzer 1 is set such that the drive signal with the frequency f1 and the drive signal with the frequency f2 are alternately input by the input operation at the input unit 16. With this operation, in the stirrer 20, the drive signal with the frequency f1 and the drive signal with the frequency f2 are alternately input to the surface acoustic wave device 24 in a time-sharing manner during the stop period Ts when the wheel electrode 4e with which the contactor 21b comes in contact is changed, as shown in FIG. 10. Thus, when the frequency of the drive signal input to the surface acoustic wave device 24 is changed by the drive control unit 21 every time the cuvette wheel 4 of the automatic analyzer 1 stops, the transducers 24b and 24c emitting the sonic wave are switched in a self-selection manner.

As a result, as shown in FIG. 11, the sonic wave Wa1 with the frequency f1 from the transducer 24b arranged at the lower part of the reactor vessel 5 and the sonic wave Wa2 with the frequency f2 from the transducer 24c arranged at the upper part thereof alternately leak into the liquid sample Ls in the stirrer 20, whereby an acoustic flow is generated. Accordingly, the liquid sample Ls retained in the reactor vessel 5 is efficiently stirred from the bottom part of the reactor vessel 5 to the gas/liquid interface with less energy loss. The switching time of the frequencies f1 and f2 is not always set to 1 : 1. It may be appropriately set according to the property of the specimen or the amount of the liquid.

In the stirrer 20, the single drive control unit 21 and a set of the input terminals 24d are connected by the contactor 21b that comes in contact with the wheel electrodes 4e as shown in FIG. 4, regardless of the number of the surface acoustic wave device 24. The transducers 24b and 24c of the surface acoustic wave device 24 generating a sonic wave are switched in a self-selection manner by changing the frequency of the drive signal by the drive control unit 21. Therefore, the stirrer 20 does not need a switch circuit as is conventionally needed in stirring means, and further, even if plural transducers 24b and 24c serving as a sound generator and having a different resonance frequency are provided, the increase in the number of wirings is prevented and the transducers 24b and 24c generating a sonic wave can easily be changed to the specific transducers 24b and 24c with a simple structure.

Moreover, since the stirrer 20 employs the surface acoustic wave device 24 having transducers in which the resonance frequency is different depending upon the position, the drive control unit 21 and a set of the input terminals 24d are connected. Therefore, the number of the wirings can be reduced, whereby the surface acoustic wave device 24 can be mounted on a small vessel. Consequently, the vessel can be miniaturized, and further, the analyzer can be downsized.

### (Second Embodiment)

Subsequently, the stirrer, vessel and analyzer according to a second embodiment of the present invention will be explained in detail below with reference to the drawings. The stirrer and the analyzer in the first embodiment use the reactor vessel having the surface acoustic wave device mounted on the side wall. On the other hand, the stirrer and the analyzer according to the second embodiment use a reactor vessel having a surface acoustic wave device mounted on the outer face of the bottom wall.

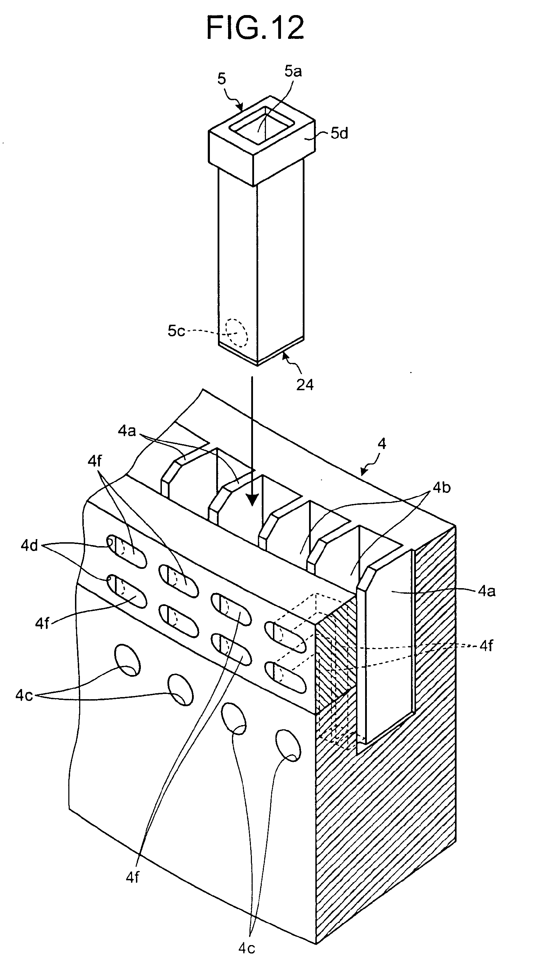

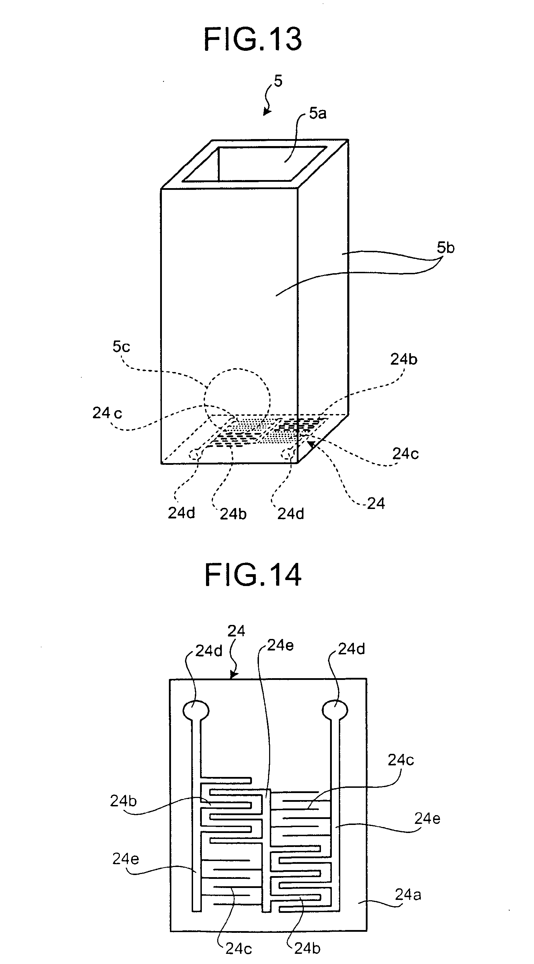

FIG. 12 is a perspective view showing a structure of a cuvette wheel in the automatic analyzer according to the second embodiment, wherein the A-part of the cuvette wheel constituting the automatic analyzer shown in FIG. 1 is enlarged and a part thereof is sectionally shown. FIG. 13 is a perspective view of the reactor vessel from which a cap is removed. FIG. 14 is a front view of the surface acoustic wave device mounted on the outer face of the bottom wall of the reactor vessel. The automatic analyzer and the reactor vessel explained below including the second embodiment have the basic structure same as those of the automatic analyzer 1 and the reactor vessel 5 in the first embodiment, so that the components same as those of the automatic analyzer 1 and the reactor vessel 5 in the first embodiment are identified by the same numerals.

In the second embodiment, the reactor vessel having the surface acoustic wave device mounted on the outer face of the bottom wall is used. Therefore, the shape of the wheel electrode of the cuvette wheel 4 in the automatic analyzer 1 is different from that in the first embodiment. Specifically, as shown in FIG. 12, one end of the wheel electrode 4f extending from the insertion hole 4d is bent to be in contact with the outer face of the cuvette wheel 4, while the other end extending from the insertion hole 4d is similarly bent to extend toward the bottom part of the holder 4b in the second embodiment. Thus, when the reactor vessel 5 is accommodated into the holder 4b, each of the wheel electrodes 4f is connected to the corresponding input terminals 24d of the surface acoustic wave device 24.

As shown in FIG. 13, the surface acoustic wave device 24 is mounted on the outer face of the bottom wall of the reactor vessel 5. As shown in FIG. 14, in the surface acoustic wave device 24, two sets of a pair of transducer 24b (center frequency f1) and the transducer 24c (center frequency f2 (>f1) that are serially connected are connected in parallel to a set of the input terminals 24d, wherein two transducers 24b and two transducers 24c are arranged on a diagonal line on the piezoelectric substrate 24a.

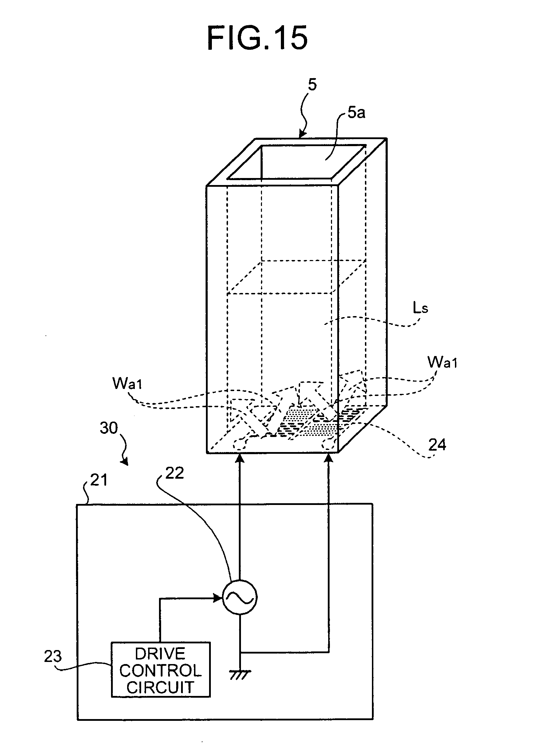

On the other hand, the stirrer 30 has the drive control unit 21 and the surface acoustic wave device 24 as shown in FIG. 15, wherein a drive signal is input from the drive control unit 21 to the surface acoustic wave device 24 through the wheel electrodes 4f. When the transducer 24b is driven in the stirrer 30, the sonic wave Wa1 with the frequency f1 leaks into the liquid sample Ls from the bottom wall of the reactor vessel 5 as shown in FIG. 15.

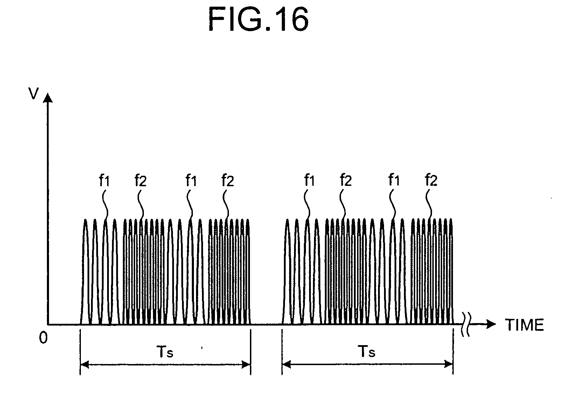

The automatic analyzer 1 according to the second embodiment employs the stirrer 30 thus configured. The automatic analyzer 1 is set beforehand such that the drive signal with the frequency f1 and the drive signal with the frequency f2 are alternately input to the surface acoustic wave device 24 by the input operation at the input unit 16 when the cuvette wheel 4 stops. Thus, in the stirrer 30, the drive signal with the frequency f1 and the drive signal with the frequency f2 are alternately input to the surface acoustic wave device 24 in a time-sharing manner for every stop time Ts during when the wheel electrode 4f with which the contactor 21b comes in contact is changed, as shown in FIG. 16. With this, in the automatic analyzer 1, the transducers 24b and 24c generating a sonic wave are switched in a self-selecting manner every time the cuvette wheel 4 stops.

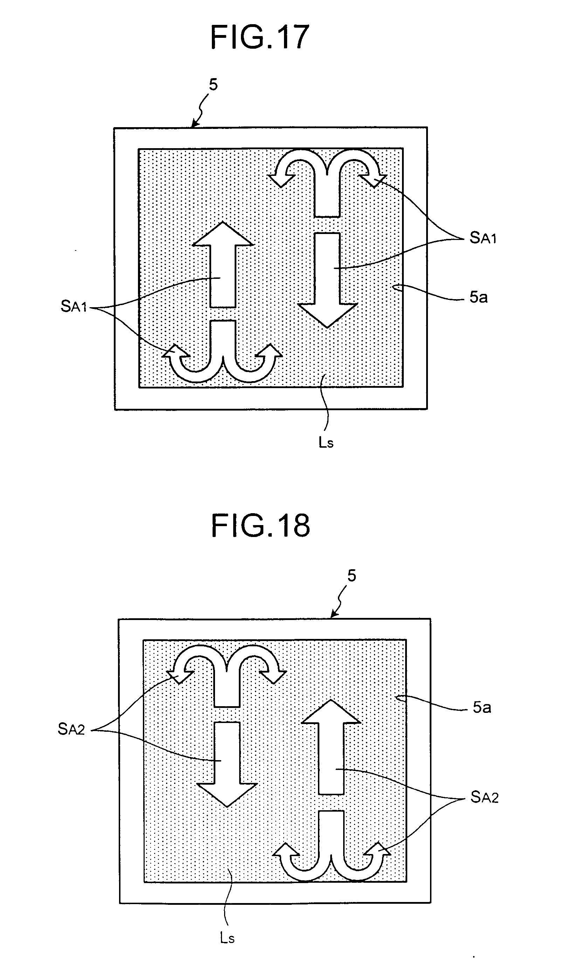

As a result, when the transducer 24b is driven in the stirrer 30, the sonic wave with the frequency f1 leaks into the liquid sample Ls from the bottom wall of the reactor vessel 5 so as to produce an acoustic flow SA1 as shown in FIG. 17 that is a plan view of the reactor vessel 5. On the other hand, when the transducer 24c is driven in the stirrer 30, the sonic wave with the frequency f2 leaks into the liquid sample Ls from the bottom wall of the reactor vessel 5 so as to produce an acoustic flow SA2 as shown in FIG. 18. The two transducers 24b and two transducers 24c are arranged on the lines crossing on the piezoelectric substrate 24a. Therefore, the sonic waves and the acoustic flows SA1 and SA2, which have different generating positions and different directions, are alternately produced in the liquid sample Ls retained in the reactor vessel 5. Accordingly, the stirrer 30 can efficiently stir the liquid sample Ls retained in the reactor vessel 5. Since the surface acoustic wave device 24 is mounted on the outer face of the bottom wall of the reactor vessel 5 in the stirrer 30, the transducer is switched to the transducer 24b or the transducer 24c, which is a sound generator for generating a sonic wave regardless of the amount of the liquid sample retained in the reactor vessel 5. The switching time of the frequencies f1 and f2 and the switching order may be appropriately be set or changed according to the characteristic of the specimen or the amount of the liquid.

In the stirrer 30, the single drive control unit 21 and a set of the input terminals 24d are connected by the contactor 21b that comes in contact with the wheel electrodes 4f, regardless of the number of the surface acoustic wave device 24. The transducers 24b and 24c of the surface acoustic wave device 24 generating a sonic wave are switched in a self-selection manner by changing the frequency of the drive signal by the drive control unit 21. Therefore, the stirrer 30 does not need a switch circuit as is conventionally needed in stirring means, and further, even if plural transducers 24b and 24c serving as a sound generator and having a different resonance frequency are provided, the increase in the number of wirings is prevented and the transducers 24b and 24c generating a sonic wave can easily be changed to the specific transducers 24b and 24c with a simple structure.

### (Third Embodiment)

Subsequently, a stirrer, a vessel and an analyzer according to a third embodiment of the present invention will be explained in detail below with reference to the drawings. The stirrer and the analyzer in the first and the second embodiments employ the reactor vessel having mounted thereto the surface acoustic wave device with plural fingers constituting the transducer arranged in the same direction. On the other hand, the stirrer and the analyzer according to the third embodiment employs a reactor vessel having mounted thereto a surface acoustic wave device in which the directions of the fingers are different by 90° among plural transducers.

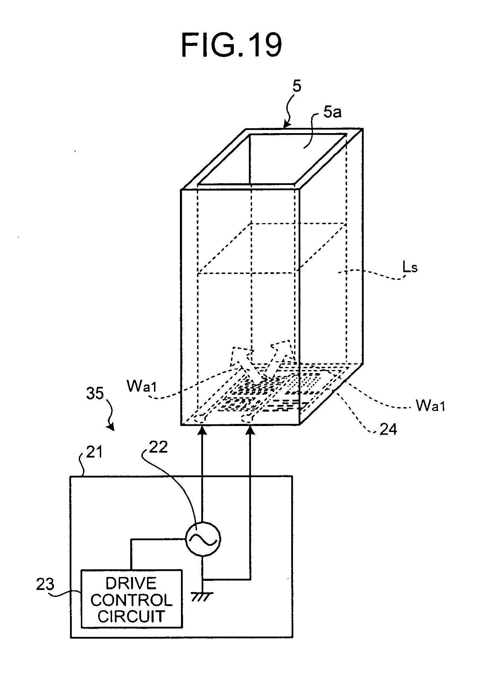

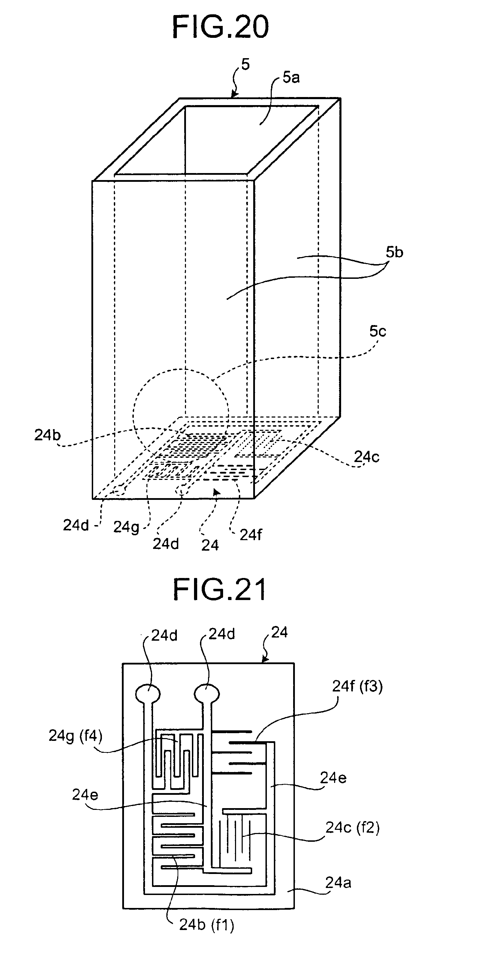

FIG. 19 is a block diagram showing a schematic structure of the stirrer according to the third embodiment together with the perspective view of the reactor vessel. FIG. 20 is a perspective view of the reactor vessel from which a cap is removed. FIG. 21 is a front view of the surface acoustic wave device mounted on the outer face of the bottom wall of the reactor vessel 5.

As shown in FIG. 19, the stirrer 35 according to the third embodiment has the drive control unit 21 and the surface acoustic wave device 24 mounted on the outer face of the bottom wall of the reactor vessel 5. When the reactor vessel 5 is accommodated in the holder 4b of the cuvette wheel 4, a drive signal is input to the surface acoustic wave device 24 from the drive control unit 21 through the wheel electrode 4f.

As shown in FIG. 20, the surface acoustic wave device 24 is mounted on the outer face of the bottom wall of the reactor vessel 5. As shown in FIG. 21, the transducers 24b and 24c (center frequency of f1 and f2) serially connected and transducers 24f and 24g (center frequency of f3 and f4 (<f1<f3<f2)) serially connected are connected in parallel to a set of input terminals 24d. The direction of the fingers of the transducers 24b and 24f and the direction of the fingers of the transducers 24c and 24g are different from each other by 90° on the surface of the piezoelectric substrate 24a.

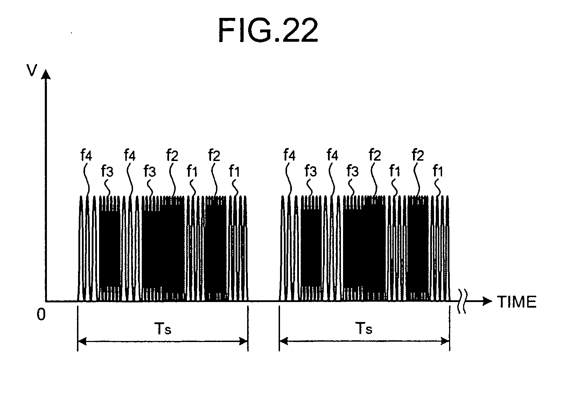

The automatic analyzer 1 according to the third embodiment employs the stirrer 35 thus configured. The automatic analyzer 1 is set beforehand such that the drive signals with the frequencies f1 to f4 are input as switched in the order of the frequencies f4, f3, f2 and f1 to the surface acoustic wave device 24 by the input operation at the input unit 16 when the cuvette wheel 4 stops. Thus, in the stirrer 35, the drive signals with the frequencies f1 to f4 are input to the surface acoustic wave device 24 as switched by the drive control unit 21 for every stop time Ts during when the wheel electrode 4f with which the contactor 21b comes in contact is changed, as shown in FIG. 22. With this, in the automatic analyzer 1, the transducers 24b, 24c, 24f, and 24g, which generate a sonic wave, are switched in a self-selection manner every time the cuvette wheel 4 stops.

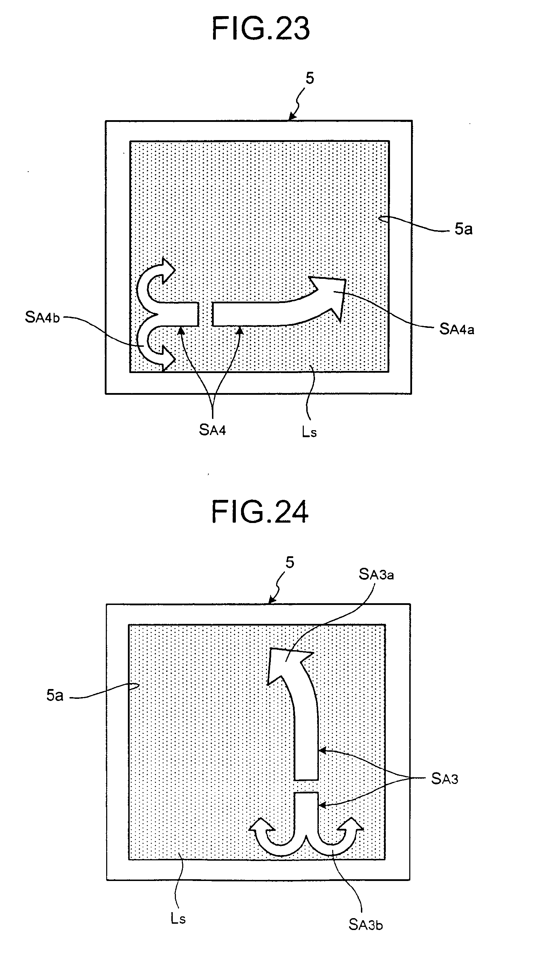

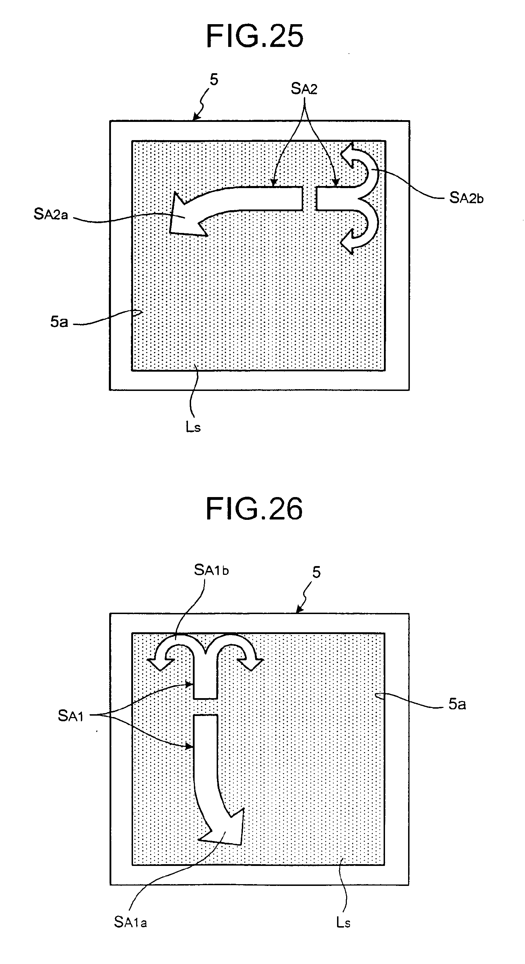

As a result, when the transducer 24g is driven in the stirrer 35, the sonic wave with the frequency f4 leaks into the liquid sample Ls from the bottom wall of the reactor vessel 5 so as to produce an acoustic flow SA4 as shown in FIG. 23. When the transducer 24f is driven in the stirrer 35, the sonic wave with the frequency f3 leaks into the liquid sample Ls from the bottom wall so as to produce an acoustic flow SA3 as shown in FIG. 24. When the transducer 24c is driven in the stirrer 35, the sonic wave with the frequency f2 leaks into the liquid sample Ls from the bottom wall so as to produce an acoustic flow SA2 as shown in FIG. 25. When the transducer 24b is driven in the stirrer 35, the sonic wave with the frequency f1 leaks into the liquid sample Ls from the bottom wall so as to produce an acoustic flow SA1 as shown in FIG. 26.

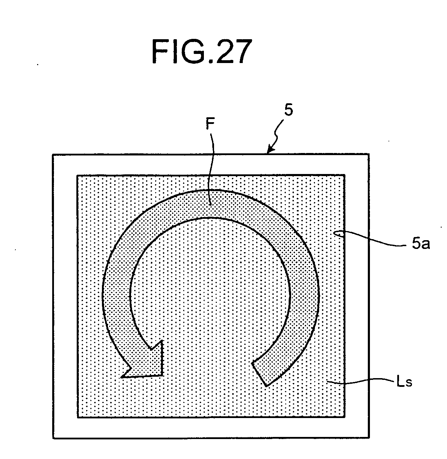

Consequently, the acoustic flows SA4 to SA1 are produced sequentially in the liquid sample Ls retained in the reactor vessel 5. The continued acoustic flows SA4a to SA1a having the large flow rate among the acoustic flows form a swirl F in the counterclockwise direction as shown in FIG. 27. The stirrer 35 can efficiently stir the liquid sample Ls retained in the reactor vessel 5 by means of the swirl F. Since the surface acoustic wave device 24 is mounted on the outer face of the bottom wall of the reactor vessel 5 in the stirrer 35, the transducer can be switched to the specific transducer of the transducers 24b, 24c, 24f, and 24g that generate a sonic wave regardless of the amount of the liquid sample retained in the reactor vessel 5.

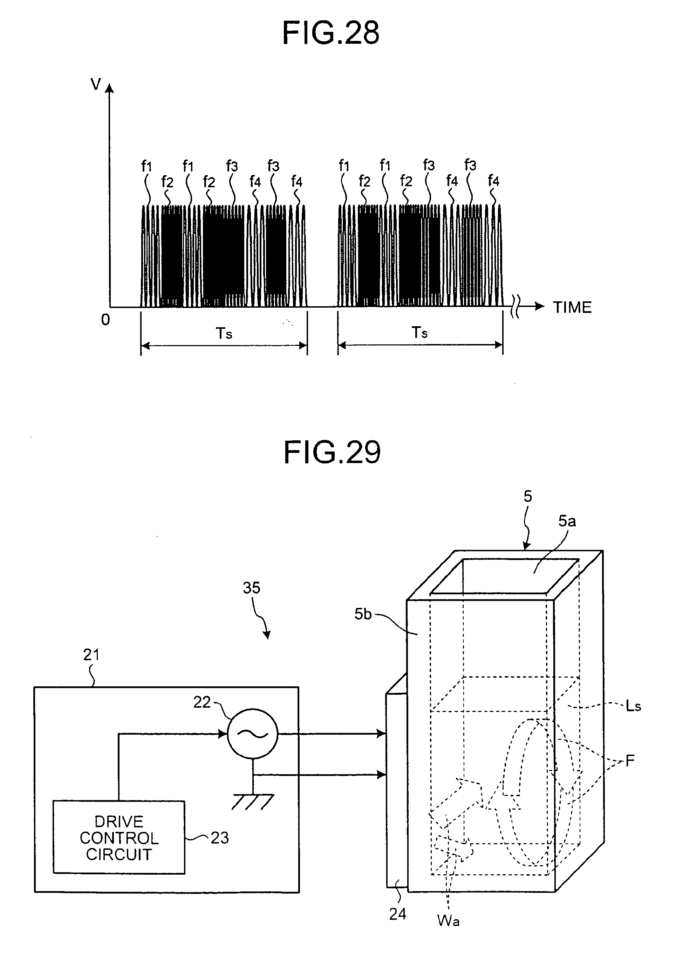

So long as the stirrer 35 can efficiently stir the liquid sample Ls retained in the reactor vessel 5, the order of switching the frequency of the drive signal that drives the surface acoustic wave device 24 by the drive control unit 21 is not necessarily the order of f4, f3, f2 and f1. The arrangement positions of the transducers 24b, 24c, 24f and 24g are also not limited to the positions shown in FIG. 21. Therefore, in the stirrer 35, the drive control unit 21 may drive the surface acoustic wave device 24 with the frequency in the order of f1, f2, f3 and f4 or another order after it drives the surface acoustic wave device 24 with the frequency in the order of f4, f3, f2 and f1 as shown in FIG. 28. If the stirring order is reversed, the acoustic flow produced in the liquid sample Ls retained in the reactor vessel 5 is disturbed, so that the stirring effect of the liquid sample Ls is enhanced, depending upon the analyzing subject.

As shown in FIG. 29, the surface acoustic wave device having the transducers 24b, 24c, 24f and 24g may be provided to the outer face of the side wall 5b of the reactor vessel 5 in the stirrer 35. With this structure, in the stirrer 35, the drive signals with the frequencies f1 to f4 are switched to be input to the surface acoustic wave device 24 by the drive control unit 21, whereby the swirl F caused by four types of the sonic wave Wa, on the basis of the transducers 24b, 24c, 24f and 24g, alternately leaking into the liquid sample Ls from the side wall 5b is made into a convection flowing in the vertical direction. Therefore, the degree of freedom in designing not only the stirrer 35 but also the automatic analyzer 1 can be increased.

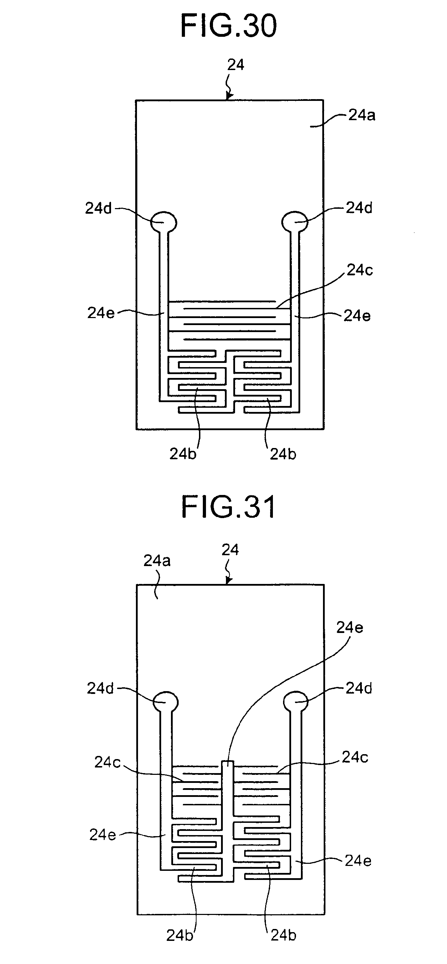

In the surface acoustic wave device 24 used in the stirrer in the first to the third embodiments, the number of the transducers serving as a sound generator can be changed to various numbers according to an object. For example, three transducers may be used as shown in FIG. 30, wherein two transducers 24b (center frequency f1) serially connected and one transducer 24c (center frequency f2 (> f1) are connected in parallel to a set of input terminals 24d. As shown in FIG. 31, four transducers may be employed in which two transducers 24b (center frequency f1) serially connected and two transducers 24c (center frequency f2) serially connected are connected in parallel to a set of input terminals 24d.

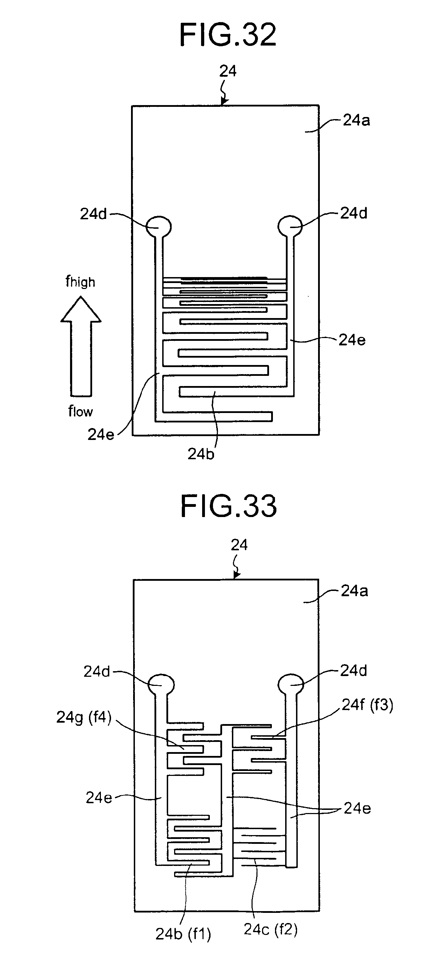

On the other hand, as shown in FIG. 32, in the surface acoustic wave device 24, the line width or pitch of plural fingers constituting the transducer 24b may be changed so as to be reduced from the lower part to the upper part in the figure, and therefore, the center frequency may be increased from the lower part to the upper part in the figure. With this structure, the position of the sound generator along the piezoelectric substrate 24a of the surface acoustic wave device 24 can be changed in the vertical direction depending on the frequency of the input drive signal, so that plural sound generators can be formed even if a single transducer 24b is used.

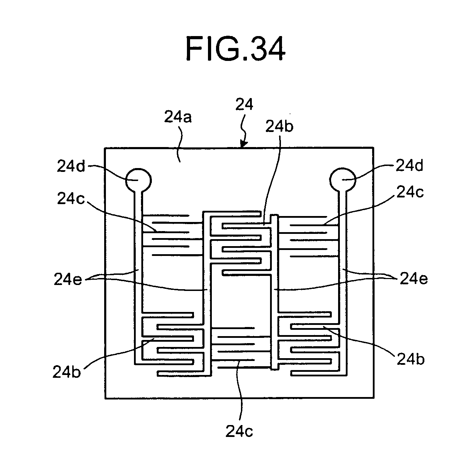

The surface acoustic wave device 24 may employ four transducers as shown in FIG. 33, in which two transducers 24b and 24c (center frequencies are f1 and f2) serially connected and two transducers 24f and 24g (center frequencies are f3 and f4 (<f1<f3<f2) serially connected are connected in parallel to a set of input terminals 24d. The surface acoustic wave device 24 may also employ six transducers as shown in FIG. 34, wherein two transducers 24b serially connected with one transducer 24c arranged therebetween and two transducers 24c serially connected with one transducer 24b arranged therebetween are connected in parallel to a set of input terminals 24d. In this case, the center frequencies of the adjacent transducers 24b and 24c in the vertical direction and lateral direction are alternately different from each other.

When a specimen is analyzed by the automatic analyzer, the amount of the liquid sample containing the specimen and reagent is generally different for every inspection item. Therefore, the stirrer 35 using the surface acoustic wave device 24 according to the modification described above can be switched according to the amount of the liquid retained in the reactor vessel 5. For example, in the stirrer 35 using the surface acoustic wave device 24 shown in FIG. 33, the position of the emitted sonic wave in the height direction can be switched according to the amount of the liquid retained in the reaction vessel 5 by driving the surface acoustic wave device 24 with different drive frequencies f1 to f4.

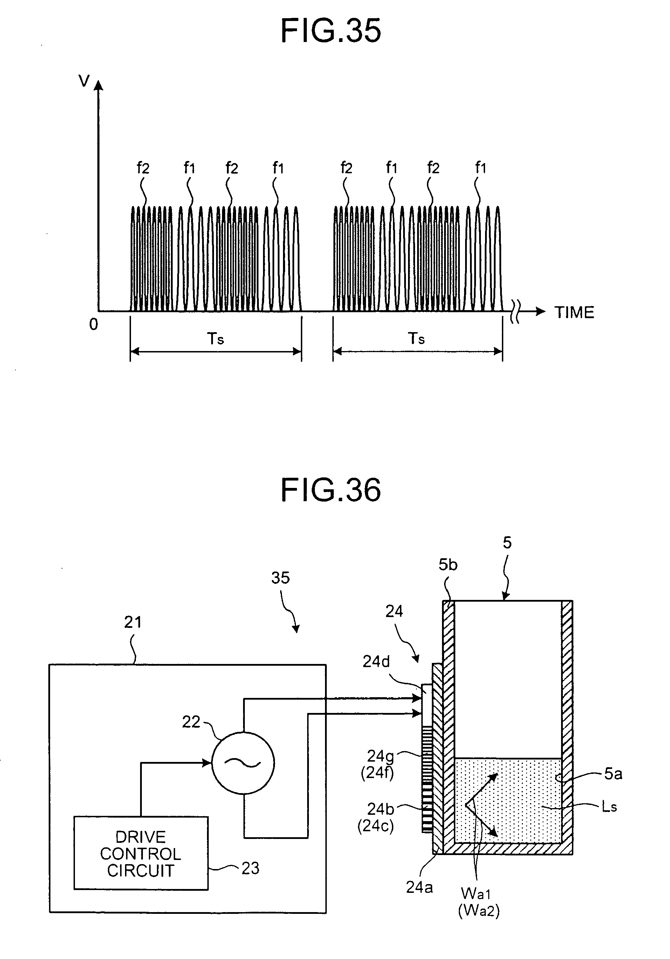

Specifically, when the amount of the liquid sample containing the specimen and the reagent is small, the automatic analyzer 1 provided with the stirrer 35 is set beforehand by the input operation at the input unit 16 such that the drive signal with the frequency f1 and the drive signal with the frequency f2 are alternately input to the surface acoustic wave device 24 in a time-sharing manner for every stop time Ts during when the wheel electrode 4f with which the contactor 21b comes in contact is changed, as shown in FIG. 35. Thus, every time the cuvette wheel 4 stops, the transducers 24b and 24c of the plural transducers 24b, 24c, 24f and 24g are driven in the automatic analyzer 1. As a result, in the stirrer 35, the liquid sample Ls retained in the reactor vessel 5 can efficiently be stirred with less energy loss by the acoustic flow caused by the sonic wave Wa1 with the frequency f1 and the sonic wave Wa2 with the frequency f2 from the transducers 24b and 24c arranged at the lower part of the reactor vessel 5, these sonic waves Wa1 and Wa2 alternately leaking into the liquid sample Ls.

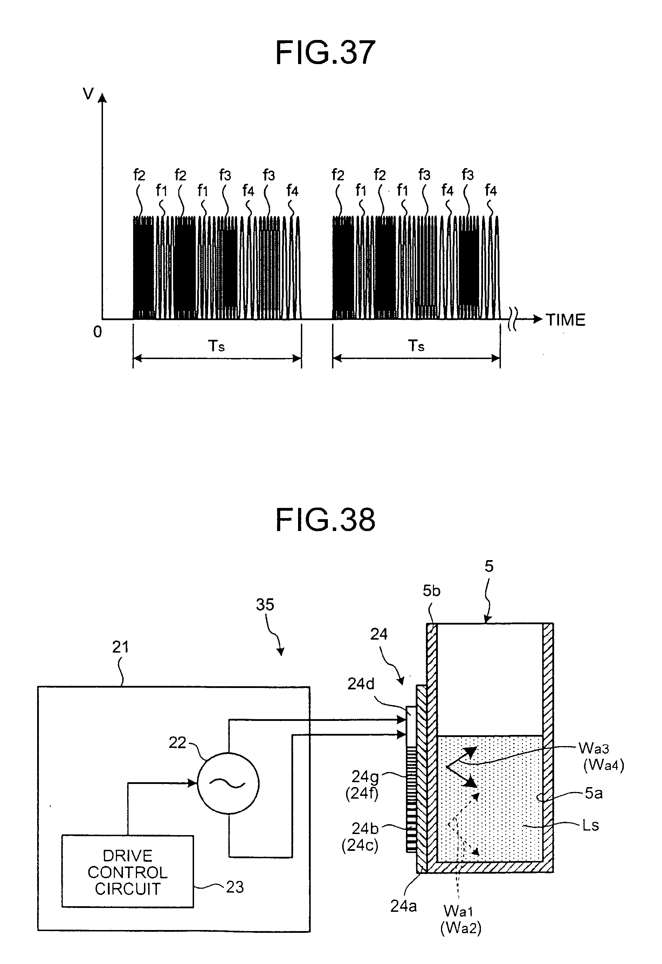

On the other hand, when the amount of the liquid is large, it takes much time for the flow caused by the sonic wave Wa1 and the sonic wave Wa2 to arrive at the gas/liquid interface, so that it is difficult to sufficiently stir the liquid sample Ls in a short period. Therefore, the automatic analyzer 1 is set such that the drive signals each having the frequency of f1 to f4 are alternately input to the surface acoustic wave device 24 in a time-sharing manner by changing the frequency of the drive signal, in order to alternately switch the position of the transducers 24b, 24c, 24f and 24g that are to be driven, as shown in FIG. 37. Thus, in the automatic analyzer 1, the drive signals each having the frequency of f1 to f4 are alternately input to the surface acoustic wave device 24 for every stop time Ts during when the cuvette wheel 4 stops.

As a result, in the stirrer 35, the sonic waves Wa1 and Wa2 with the frequencies f1 and f2 from the transducers 24b and 24c arranged at the lower part and the sonic waves Wa3 and Wa4 with the frequencies f3 and f4 from the transducers 24f and 24g arranged at the upper part alternately leak into the liquid sample Ls as shown in FIG. 38, whereby the acoustic flow is produced even in the vicinity of the gas/liquid interface. Accordingly, the liquid sample Ls retained in the reactor vessel 5 can efficiently be stirred from the bottom part to the gas/liquid interface with less energy loss.

In this case, the drive control unit 21 in the automatic analyzer 1 changes the frequency of the drive signal on the basis of the information input by the input operation at the input unit 16, such as the analysis item of the liquid, property of the liquid, amount of the liquid, or the like. For example, when the surface tension of the specimen in a small amount dispensed into the reactor vessel 5 is smaller than that of the reagent in a large amount, or when the specimen and the reagent have no affinity to each other, such as when the specimen in a small amount is oily (having small specific gravity) and the reagent in a large amount is water-based (having large specific gravity), the phase of the specimen and the phase of the reagent are likely to be separated, so that it is difficult to stir. In this case, the automatic analyzer 1 sets by the input operation at the input unit 16 such that the drive signal is alternately input to the surface acoustic wave device 24 in a time-sharing manner with the frequency changed in the order of f3, f4, f1 and f2.

Thus, in the automatic analyzer 1, the sonic waves Wa3 and Wa4 with the frequencies f3 and f4 alternately leak into the liquid sample Ls from the transducers 24f and 24g arranged at the upper part of the reactor vessel 5, and thereafter, the sonic waves Wa1 and Wa2 with the frequencies f1 and f2 leak into the liquid sample Ls from the transducers 24b and 24c arranged at the lower part, for every stop time Ts during when the cuvette wheel 4 stops. Therefore, a series of flow in the vertical direction is generated in the liquid sample Ls in the reactor vessel 5, by which the specimen in a small amount can be caught by the reagent in a large amount. Therefore, the specimen and the reagent can efficiently be stirred.

When the surface tension of the specimen in a small amount dispensed into the reactor vessel 5 is larger than that of the reagent in a large amount, contrary to the above-mentioned case, or when the specimen and the reagent have no affinity to each other, such as when the specimen in a small amount is oily (having small specific gravity) and the reagent in a large amount is water-based (having large specific gravity), the transducers 24b and 24c arranged at the lower part of the reactor vessel 5 are driven, and then, the transducers 24f and 24g arranged at the upper part are driven.

In the stirrer 35 according to the third embodiment, as shown in FIG. 19, the single drive control unit 21 and a set of the input terminals 24d are connected by the contactor 21b that comes in contact with the wheel electrodes 4f, regardless of the number of the surface acoustic wave device 24. The transducers 24b and 24c of the surface acoustic wave device 24 generating a sonic wave are switched in a self-selection manner by changing the frequency of the drive signal by the drive control unit 21. Therefore, the stirrer 35 does not need a switch circuit as is conventionally needed in stirring means, and further, even if plural transducers 24b and 24c serving as a sound generator and having a different resonance frequency are provided, the increase in the number of wirings is prevented and the transducers 24b and 24c generating a sonic wave can easily be changed to the specific transducers 24b and 24c with a simple structure.

### (Fourth Embodiment)

A stirrer, a vessel and an analyzer according to a fourth embodiment of the present invention will be explained below in detail with reference to the drawings. The stirrer, the vessel and the analyzer in the first to the third embodiments employ a surface acoustic wave device as sonic wave generating means. On the other hand, the stirrer, the vessel and the analyzer according to the fourth embodiment employ a thickness-mode transducer as sonic wave generating means.

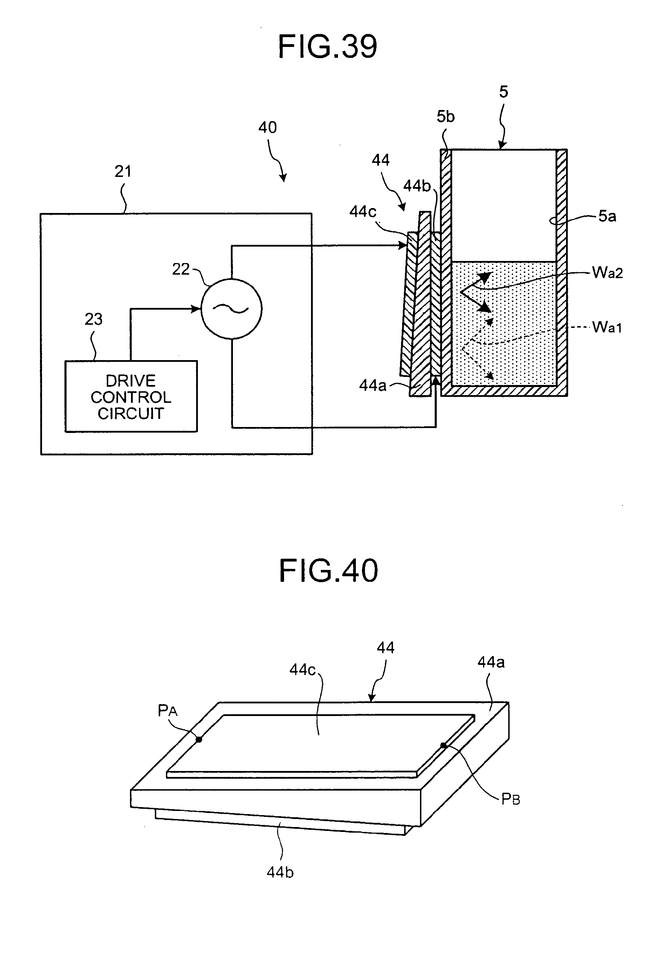

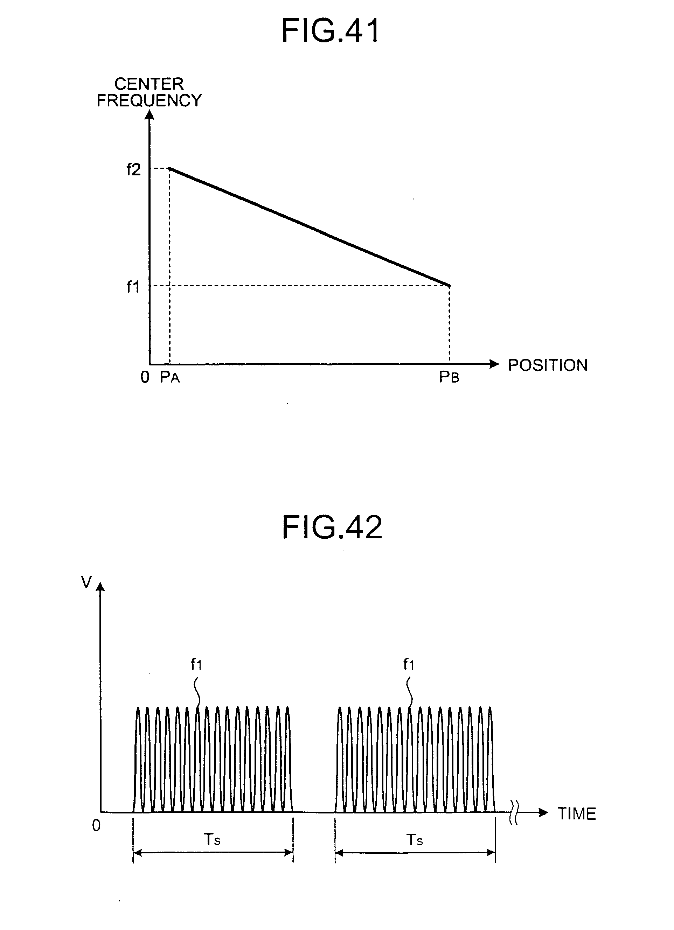

FIG. 39 is a block diagram showing a schematic structure of a stirrer according to the fourth embodiment together with the cross-sectional view of the reactor vessel. FIG. 40 is a perspective view of a thickness-mode transducer used in the stirrer shown in FIG. 39. FIG. 41 is a frequency characteristic graph of the thickness-mode transducer showing a relationship between the position along the longitudinal direction of the piezoelectric substrate and the center frequency.

As shown in FIG. 39, a thickness-mode transducer 44 is mounted on the outer face of the side wall 5b of the reactor vessel 5 according to the fourth embodiment. The stirrer 40 according to the fourth embodiment has the drive control unit 21 and the thickness-mode transducer 44 as shown in FIG. 39. When the reactor vessel 5 is accommodated in the holder 4b of the cuvette wheel 4, a drive signal is input to the thickness-mode transducer 44 from the drive control unit 21 through the wheel electrode 4e.

The thickness-mode transducer 44 is mounted on the outer face of the side wall 5b of the reactor vessel 5 through the acoustic matching layer. As shown in FIGS. 39 and 40, a signal line electrode 44b is provided on one surface of a piezoelectric substrate 44a made of lead zirconate titanate (PZT) and a ground electrode 44c is provided on the other surface. The signal line electrode 44b and the ground electrode 44c are sound generators that convert power transmitted from the drive control unit 21 into a surface acoustic wave (sonic wave), wherein a sonic wave is emitted from the ground electrode 44c. The thickness-mode transducer 44 is formed into a wedge having the other surface tilted with respect to one surface to which the ground electrode 44c is mounted. Therefore, the thickness-mode transducer 44 has a relationship shown in FIG. 41 between the position along the longitudinal direction of the piezoelectric substrate 44a with the points PA and PB in FIG. 40 defined as references and the center frequency, wherein the center frequency is linearly reduced with the increase in the thickness of the piezoelectric substrate 44a. The thickness-mode transducer 44 has plural sound generators, each having a different resonance frequency, along the longitudinal direction in a spot-like form.

Accordingly, when the drive signal having a different frequency is input to the corresponding signal line electrode 44b and the ground electrode 44c from the drive control unit 21 through the wheel electrode 4e, the vibrated sonic wave is emitted from the ground electrode 44c located at the position having the thickness of the piezoelectric substrate 44a with the center frequency that is resonated to the frequency of the input drive signal, so that the position of the sound generator is changed along the longitudinal direction.

The automatic analyzer 1 according to the fourth embodiment employs the stirrer 40 thus configured. In the automatic analyzer 1, the frequency of the drive signal is changed according to the amount of the liquid retained in the reactor vessel 5 by the input operation at the input unit 16. When the amount of the liquid is small, the drive signal with the frequency f1 is input to the thickness-mode transducer 44, for example. With this, the drive signal with the frequency f1 is input to the thickness-mode transducer 44 through the contact between the contactor 21b and the wheel electrode 4e when the cuvette wheel 4 stops.

Accordingly, in the stirrer 40, the thickness-mode transducer 44 is driven by the drive signal with the frequency f1 during the stop period Ts when the cuvette wheel 4 stops, as shown in FIG. 42. As a result, the surface acoustic wave (sonic wave) induced by the thickness-mode transducer 44 during when the cuvette wheel 4 stops is propagated from the acoustic matching layer into the side wall 5b of the reactor vessel 5, and leaks into the liquid sample having close acoustic impedance. The leaking sonic wave causes an acoustic flow, whereby the dispensed reagent and the specimen are stirred.

In this case, the thickness-mode transducer 44 vibrated by the drive signal with the frequency f1 is located at lower part of the reactor vessel 5. Therefore, as shown in FIG. 39, the sonic wave Wa1 leaking into the liquid sample Ls directs toward two directions, i.e., in the diagonally upward direction and diagonally downward direction indicated by the arrows, with the lower part of the reactor vessel 5 corresponding to the point PB of the thickness-mode transducer 44 defined as a starting point. Accordingly, two acoustic flows corresponding to two directions are caused in the liquid sample Ls retained in the reactor vessel 5, with the result that the dispensed reagent and the specimen are stirred.

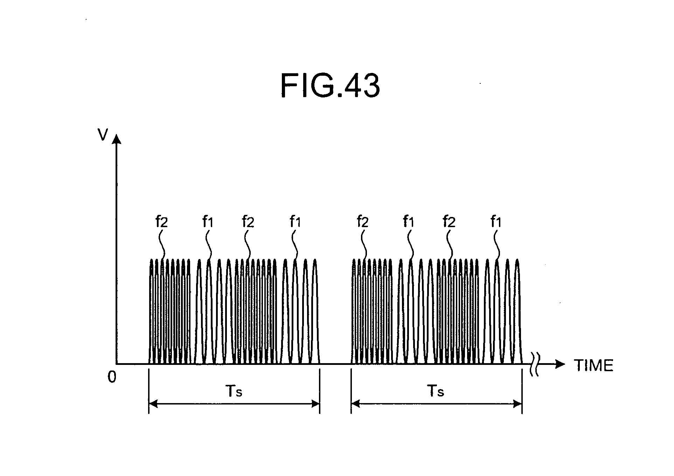

On the other hand, when the amount of the liquid is large, the automatic analyzer 1 sets by the input operation at the input unit 16 such that the drive signal with the frequency f1 and the drive signal with the frequency f2 (>f1) are alternately input. Thus, in the stirrer 40, the drive signal with the frequency f1 and the drive signal with the frequency f2 are alternately input to the thickness-mode transducer 44 in a time-sharing manner as shown in FIG. 43 for every stop time Ts during when the wheel electrode 4e with which the contactor 21b comes in contact is changed. Accordingly, in the automatic analyzer 1, the position from which the sonic wave is generated is alternately switched in a self-selection manner between the position corresponding to the point PA and the point PB of the thickness-mode transducer 44 every time the cuvette wheel 4 stops.

As a result, in the stirrer 40, the sonic wave Wa1 with the frequency f1 and the sonic wave Wa2 with the frequency f2 alternately leak into the liquid sample Ls from the ground electrode 44c of the thickness-mode transducer 44 so as to produce an acoustic flow as shown in FIG. 39. Consequently, an effective flow is produced even in the vicinity of the gas/liquid interface, with the result that the liquid sample Ls retained in the reaction vessel 5 can efficiently be stirred with less energy loss.

In the stirrer 40, the single drive control unit 21 and a set of the input terminals, which are the signal line electrode 44b and the ground electrode 44c, are connected by the contactor 21b that comes in contact with the wheel electrodes 4e as shown in FIG. 4, regardless of the number of the thickness-mode transducer 44. The position of the ground electrode 44c of the thickness-mode transducer 44 generating a sonic wave are switched in a self-selection manner by changing the frequency of the drive signal by the drive control unit 21. Therefore, the stirrer 40 does not need a switch circuit as is conventionally needed in stirring means, and further, even if plural sound generators having a different resonance frequency are provided, the increase in the number of wirings is prevented and the sound generator generating a sonic wave can easily be changed to the specific sound generator with a simple structure.

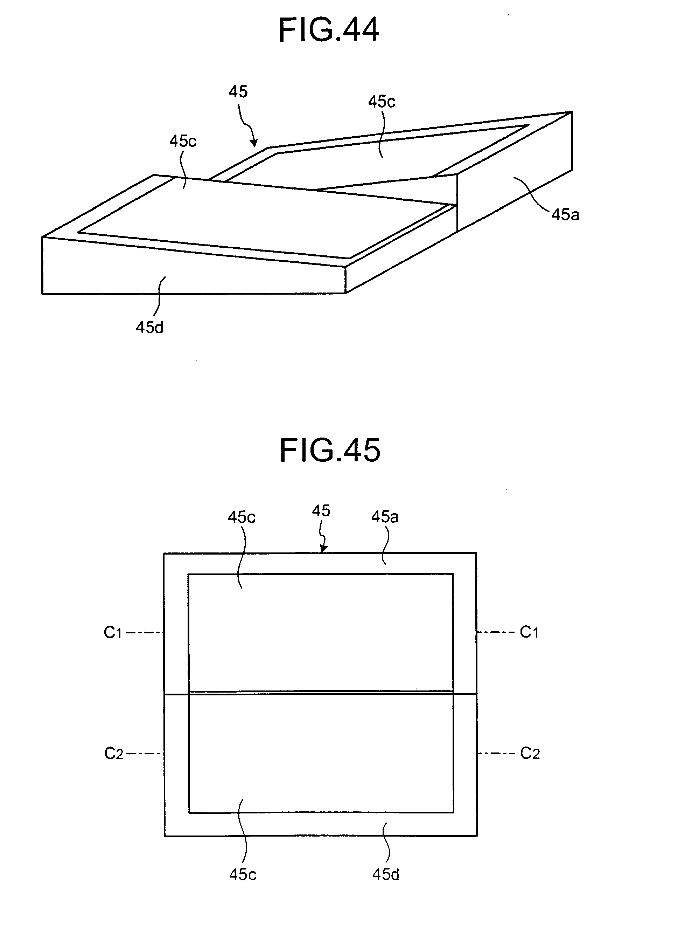

The thickness-mdoe transducer used in the stirrer 40 according to the fourth embodiment may have two piezoelectric substrates 45a and 45d in which the thickness of each of the substrates 45a and 45d linearly changes along the longitudinal direction reversal to that of the other, like the thickness-mode transducer 45 shown in FIG. 44. The two piezoelectric substrates 45a and 45d may be configured to have a common signal line electrode 45b and a ground electrode 45c. In the thickness-mode transducer 45 thus configured, the thickness of each of the piezoelectric substrates 45a and 45d at the cross unit in the longitudinal direction along the line C1 - C1 and the line C2 - C2 linearly changes as shown in FIG. 45. Therefore, when drive signals having the same frequency are input, the position of the sound generator is changed according to the drive frequency, so that two portions are simultaneously vibrated as the sound generators.

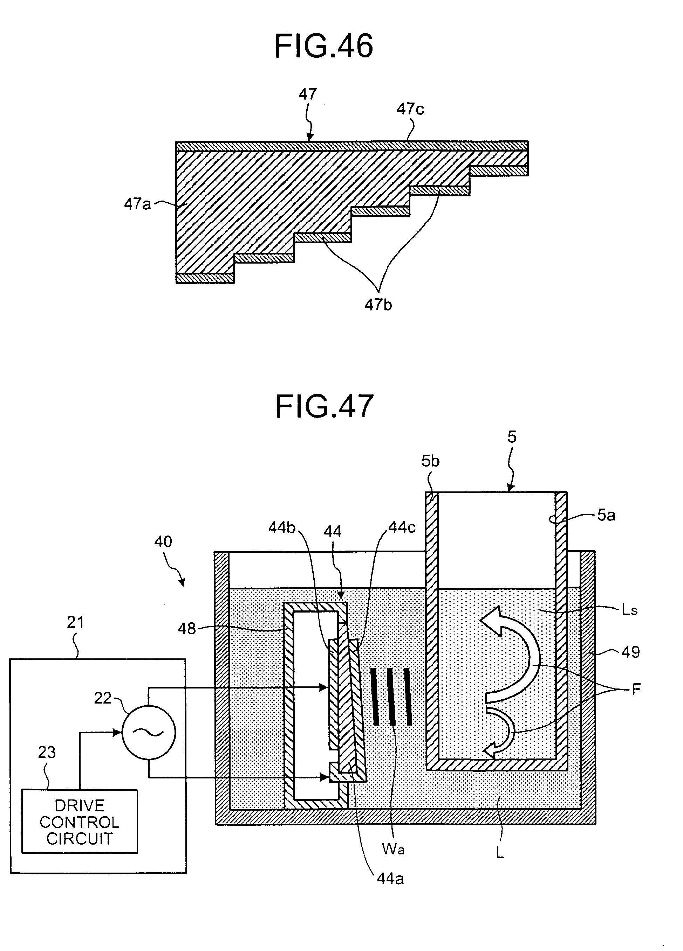

The thickness-mode transducer used in the stirrer 40 according to the fourth embodiment may be configured as follows. Specifically, like the thickness-mode transducer 47 shown in FIG. 46, the thickness of the piezoelectric substrate 47a may be changed step wisely, wherein a ground electrode 47c is formed on one surface whose thickness is step wisely changed, and a signal line electrode 47b may be formed on a flat surface. In the thickness-mode transducer 47 thus configured, the frequency of the sonic wave, which is vibrated according to the drive frequency of the input drive signal, can digitally be switched according to the thickness of the piezoelectric substrate 47a that changes step wisely.

The stirrer 40 according to the fourth embodiment may be arranged, as shown in FIG. 47, in a thermostatic chamber 49, which accommodates a liquid L serving as an acoustic matching layer, with the reactor vessel 5 and the thickness-mode transducer 44 apart from each other. Since the thickness-mode transducer 44 emits a sonic wave Wa having a frequency lower than that of the sonic wave generated from the transducers 22b and 22c of the surface acoustic wave device 24 or the like, the attenuation of the sonic wave is reduced even when the thickness-mode transducer 44 is arranged apart from the reactor vessel 5. Therefore, it can well be used for generating the flow F in the liquid sample Ls. When the stirrer 40 shown in FIG. 47 is used in the automatic analyzer, thermostatic water can be used as the liquid L serving as the acoustic matching layer. The thickness-mode transducer 44 is mounted on a waterproof case 48 with the signal line electrode 44b facing the inner side and the ground electrode 44c facing the reactor vessel 5.

In the above-mentioned embodiments, the drive control unit 21 is provided at one portion. However, the drive control unit 21 may be provided at plural portions depending upon stirring purpose. In the above-mentioned embodiments, the surface acoustic wave device 24 or the thickness-mode transducer 44 serving as sonic wave generating means is mounted on the outer face of the reactor vessel 5 so as to be not in contact with the retained liquid. However, so long as the surface acoustic wave device 24 is connected to the drive control unit 21 by a set of input terminals 24d, and so long as the thickness-mode transducer 44 is connected to the drive control unit 21 by the ground electrode 44c and the signal line electrode 44b, which are a set of input terminals, the surface acoustic wave device 24 or the thickness-mode transducer 44 may be configured to form a part of the reactor vessel 5 so as to be in contact with the retained liquid.

### INDUSTRIAL APPLICABILITY

As described above, even if a stirrer, a vessel and an analyzer according to the present invention has plural sound generators, they can simply switch the sound generator emitting a sonic wave to a specific sound generator, they are useful to simplify the structure of an electric circuit, and particularly they are suitable for use in an automatic analyzer.

## Claims

1. A stirrer for stirring a liquid retained in a vessel with a sonic wave, comprising:
a sonic wave generating unit, including plural sound generators each having a different resonance frequency, for emitting the sonic wave generated from the sound generator toward the liquid; and
a drive control unit for switching the sound generator which generates the sonic wave to a specific sound generator among the plural sound generators by changing a frequency of a drive signal input to the sonic wave generating unit.

2. The stirrer according to claim 1, wherein
the drive control unit changes a position of the sound generator which emits the sonic wave or a number of the sound generators which emits the sonic wave, according to the frequency of the drive signal.

3. The stirrer according to claim 1, wherein
the drive control unit changes the frequency of the drive signal based on received information about an inspection item of the liquid, a property of the liquid, or the amount of the liquid.

4. The stirrer according to claim 1, wherein
the drive control unit causes a series of flow in the liquid by controlling an order of switching the sound generator emitting the sonic wave to the specific sound generator.

5. The stirrer according to claim 4, wherein the series of flow is a swirl.

6. The stirrer according to claim 4, wherein
the liquid contains at least a first liquid and a second liquid that is less than the first liquid, and
the series of flow is a flow for drawing the second liquid into the first liquid.

7. The stirrer according to claim 1, wherein
the drive control unit switches the sound generator emitting the sonic wave by driving the plural sound generators at a different timing.

8. The stirrer according to claim 1, wherein
one of the plural sound generators emits the sonic wave in the different directions by 90°.

9. The stirrer according to claim 8, wherein
a direction of the sonic waves emitted this time from the plural sound generators is different from a direction of the sonic wave emitted last time from the plural sound generators by 90°.

10. The stirrer according to claim 1, wherein
the drive control unit simultaneously inputs drive signals each having the same drive frequency to the plural sound generators.

11. The stirrer according to claim 1, wherein
the drive control unit drives the plural sound generators in an order of switching the sound generator to the specific sound generator, and then, drives the plural sound generators in an order different from the switching order.

12. The stirrer according to claim 1, wherein
the sonic wave generating unit receives the drive signal from a set of input units.

13. The stirrer according to claim 12, wherein
the sound generator of the sonic wave generating unit is switched to the sound generator emitting the sonic wave among the plural sound generator by a self-selection caused due to change in the frequency of the drive signal by the drive control unit.

14. The stirrer according to claim 1, wherein
the plural sound generators are arranged so as to be adjacent to each other or apart from each other.

15. The stirrer according to claim 14, wherein
the resonance frequency is discontinuously changed in the plural sound generators.

16. The stirrer according to claim 14, wherein
the resonance frequency is continuously changed in the plural sound generators.

17. The stirrer according to claim 1, wherein
the drive control unit changes the frequency of the drive signal input to the sonic wave generating unit over a band including different resonance frequency.

18. The stirrer according to claim 1, wherein
the sonic wave generating unit is a surface acoustic wave device having a piezoelectric substrate and plural inter digital transducers, and the plural sound generators are the plural inter digital transducers.

19. The stirrer according to claim 18, wherein
distances between the inter digital transducers of the plural inter digital transducers on the piezoelectric substrate are different from each other.

20. The stirrer according to claim 1, wherein
the sonic wave generating unit is a thickness-mode transducer having a piezoelectric substrate whose thickness increases in one direction and an electrode mounted on both surfaces of the piezoelectric substrate.

21. The stirrer according to claim 1, wherein
the sonic wave generating unit is arranged at a position apart from the liquid.

22. The stirrer according to claim 1, wherein
the drive control unit changes a frequency of a drive voltage or drive current that is the drive signal input to the sonic wave generating unit.

23. A vessel retaining a liquid that is stirred by a sonic wave, comprising:
a sonic wave generating unit, having plural sound generators each having a different resonance frequency, wherein the sound generator generating a sonic wave emitted to the liquid is switched to a specific sound generator among the plural sound generators by change in the frequency of the drive signal.

24. The vessel according to claim 23, wherein the drive signal is input from a set of input units.

25. An analyzer that stirs and reacts a liquid sample including a specimen and a reagent retained in a vessel so as to analyze a reaction solution, comprising a stirrer according to any one of claims 1 to 22.
